# EUROPEAN PATENT SPECIFICATION

(11) **EP 0 818 386 B1**
(45) Date of publication and mention of the grant of the patent: **04.12.2002**
(21) Application number: 97111475.6
(22) Date of filing: 07.07.1997
(51) Int. Cl.: B62M 23/02

(54) **Motor-assisted bicycle**
Fahrrad mit Hilfsmotor
Bicyclette assistée par moteur

(30) Priority: 09.07.1996 JP 17963396; 09.07.1996 JP 17963496
(43) Date of publication of application: 14.01.1998
(73) Proprietor: HONDA GIKEN KOGYO KABUSHIKI KAISHA, Minato-ku Tokyo (JP)
(72) Inventor: Kawaguchi, Kenji, 4-1 Chuo 1-chome, Wako-shi, Saitama (JP); Yahagi, Kunio, 4-1 Chuo 1-chome, Wako-shi, Saitama (JP); Honda, Satoshi, 4-1 Chuo 1-chome, Wako-shi, Saitama (JP); Toriyama, Masayuki, 4-1 Chuo 1-chome, Wako-shi, Saitama (JP)
(74) Representative: Liska, Horst, Dr.-Ing.

(56) References cited:
- EP-A- 0 559 231
- EP-A- 0 569 954
- EP-A- 0 636 537
- EP-A- 0 697 330
- EP-A- 0 700 826
- EP-A- 0 795 463

## Description

### Description for the following Contracting States : DE, FR.

The present invention relates to a motor-assisted bicycle, in which a first power transmission system'having a first one-way clutch is provided between a crank shaft rotatably supported by a casing supported on a body frame and having crank pedals at both ends thereof and a power transmission member for transmitting a power to a rear wheel; and a second power transmission system having a second one-way clutch is provided between an electrically assisting motor fixedly mounted on the casing and the power transmission member, wherein the motor-assisted bicycle has an improved motor control device for controlling operation of the motor-assisted bicycle. In particular, the present invention relates to a motor-assisted bicycle in which operation of an electrically assisting motor is controlled . by a controller on the basis of a detected value obtained by a rotational speed detecting means for detecting a rotational speed representative of a bicycle speed in a state that the power is assisted by the motor, and a detected value obtained by a torque detecting means for detecting an-input torque of the crank pedals.

The motor-assisted bicycle of this type has been known, for example, from Japanese Patent Laid-open No. Hei 7-40878.

In the above-described related art motor-assisted bicycle, a rotational speed detecting means for detecting a bicycle speed in a state in which an assisting force is applied from an electrically assisting motor to a rear wheel is provided on a portion connected to a power transmission member provided coaxially with a crank shaft. Specifically, an outer gear of a planetary gear mechanism constituting part of a first power transmission system is connected to the power transmission member, and outer teeth of the outer gear is taken as a portion to be detected and a sensor for detecting such a portion is fixed on a casing. However, in a state in which an assisting force is applied from the motor to the power transmission member, the rotational speed of the power transmission member, which is detected in the related art motor-assisted bicycle, is lower than that of the motor. As a result, according to the related art motor-assisted bicycle, the outer gear having a relatively large diameter is required to be used as a portion to be detected as described above, and also a relatively expensive semiconductor device such as a Hall device is required to be used for enhancing the detection accuracy. This causes a problem in increasing not only the size of the rotational speed detecting means but also the size of the casing, resulting in the increased cost.

EP-A-559 231 discloses a motor-assisted bicycle according to the preambles of claims 1 and 3.

In view of the foregoing, the present invention has been made, and an object of the present invention is to provide a motor-assisted bicycle capable of detecting a rotational speed representative of a bicycle speed using an inexpensive, small-sized detecting means.

Another object of the present invention is to provide a motor-assisted bicycle including a control device for controlling a motor of a motor-assisted bicycle, which is capable of detecting a rotational speed representative of a bicycle speed using an inexpensive, small-sized detecting means and smoothly controlling operation of the motor.

To achieve the above object, there is provided a motor-assisted bicycle according to the invention described in claim 1.

As a difference over EP-A-795 463, which is prior art according to Article 54(3) and (4) EPC for the designation of DE and FR and discloses a one-way clutch coaxial with the crank shaft, the motor bicycle of the invention as defined in claim 1 is arranged such that said second power transmission system has at least one idle shaft for transmitting the motor power to the power transmission member and said second one-way clutch is provided with said idle shaft.

According to the invention, a rotational speed detecting means is composed of a portion to be detected which is provided on a rotating member constituting part of a second power transmission system between an electrically assisting motor and a second one-way clutch, and a sensor for detecting a rotational speed of the portion to be detected, so that a bicycle speed is represented by the rotational speed of the rotating member which has a relatively large rotational speed. As a result, it is possible to make relatively small a diameter of the portion to be detected and hence to reduce sizes of the rotational speed detecting means and a casing, and also to reduce the cost of the detecting means using a relatively inexpensive sensor.

In addition to the configuration of the above invention, the rotating member is a rotating shaft of the motor. As a result, it is possible to usually detect the rotational state of the motor and hence to eliminate the necessity of provision of a specialized means for detection of motor lock. The arrangement of the second one-way clutch with the idle shaft avoids a complicated structure of the circumference of the crank shaft.

To achieve the above object, according to an invention described in claim 3, there is provided a motor-assisted bicycle, in which a first power transmission system having a first one-way clutch is provided between a crank shaft rotatably supported by a casing supported on a body frame and having crank pedals at both ends thereof and a power transmission member interlocked with a rear wheel; and a second power transmission system having a second one-way clutch is provided between an electrically assisting motor fixedly mounted on the casing and the power transmission member, wherein the motor-assisted bicycle includes: a rotational speed detecting means for detecting a rotational speed of a rotating member constituting part of the second power transmission system between the motor and the second one-way clutch; a torque detecting means for detecting an input torque of the crank pedals; and a controller for controlling operation of the motor on the basis of detected values of the detecting means; wherein when a rotational speed detected by the rotational speed detecting means is varied to exceed a value obtained by addition of a setting value to the previous rotational speed, the controller uses the value obtained by addition of the setting value to the previous rotational speed as the present rotational speed for controlling operation of the motor.

In a controller for controlling operation of the motor on the basis of detected values of the rotational speed detecting means and a torque detecting means, when a rotational speed detected by the rotational speed detecting means is varied to exceed a value obtained by addition of a setting value to the previous rotational speed, the value obtained by the addition of the setting value to the previous rotational speed is used as the present rotational speed for controlling operation of the motor. As a result, although the rotational speed of a member constituting a second power transmission system between the motor and the second one-way clutch, even if the input torque is reduced and the second one-way clutch is turned on again in a state that the power is assisted by the motor, it is possible to prevent hunting of rotation of the motor, and hence to prevent the rider of the motor-assisted bicycle from being given a shock due to the loosened stepping-on of crank pedals.

Hereinafter, one embodiment of the present invention will be described with reference to the accompanying drawings.
Fig. 1 is a side view of a motor-assisted bicycle.
Fig. 2 is a vertical sectional side view of a motor unit, which is a sectional view taken on line 2-2 of Fig. 3.
Fig. 3 is a sectional view taken on line 3-3 of Fig. 2.
Fig. 4 is an enlarged view of an essential portion-of Fig. 3.
Fig. 5 is a sectional view taken on line 5-5 of Fig. 4.
Fig. 6 is a sectional view taken on line 6-6 of Fig. 5.
Fig. 7 is a view seen along arrows 7-7 of Fig. 4, showing a state in which a slider inner is engaged with a clutch inner ring.
Fig. 8 is a block diagram showing a configuration of a control device for controlling an electrically assisting motor.
Fig. 9 is a flow chart showing a main routine set by a controller.
Fig. 10 is a flow chart showing interruption handling performed by the controller.
Fig. 11 is a view illustrating the interruption handling performed in the controller.
Fig. 12 is a flow chart showing a sub-routine for decision of motor lock.
Figs. 13a, 13b are diagrams each showing a variation in rotational speed when steeping-on of crank pedals is stopped once.

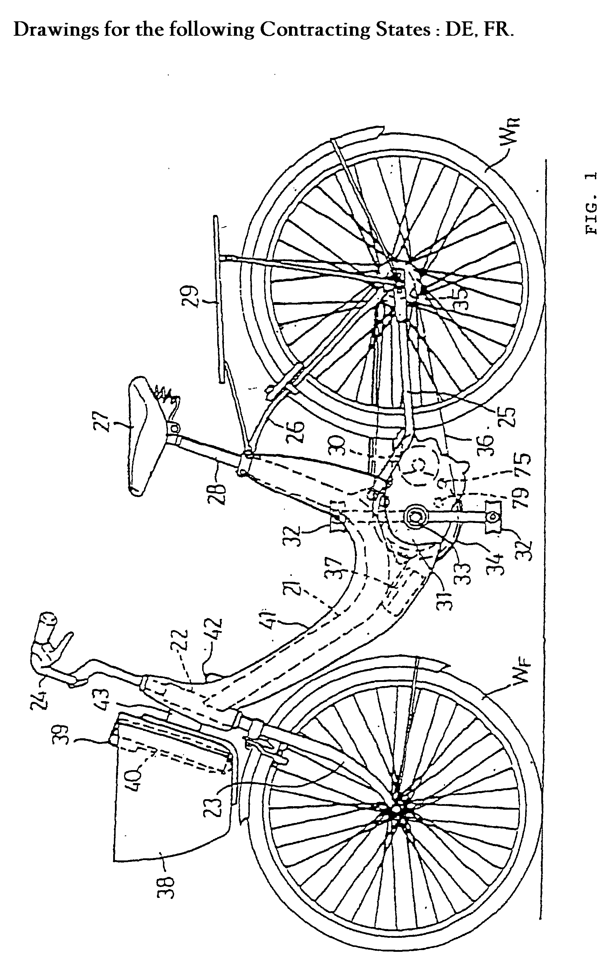

Referring first to Fig. 1, there is shown a motor-assisted bicycle of the present invention, which includes a body frame 21 formed in an approximately U-shape in a side view. A front fork 23 is operably supported on a head pipe provided at a front end of the body frame 21. A front wheel W_{F} is rotatably supported on forked ends of the front fork 23. A handlebar 24 is provided on an upper end of the front fork 23. A motor unit 31 having an electrically assisting motor 30 is provided on a lower portion of the body frame 21. A pair of right and left rear forked portions 25, 25 extend rearward, downward from the body frame 21 in a space over a rear portion of the motor unit 31 and further extend substantially in the horizontal direction in a space behind the motor unit 31. A rear wheel W_{R} is rotatably supported by the rear fork portions 25, 25 while being put therebetween. A pair of right and left stays 26, 26 are provided between both the rear forked portions 25, 25 and the rear portion of the body frame 21. A seat post 28 having at an upper end thereof a seat 27 is mounted to the rear portion of the body frame 21. Upper and lower positions of the seat 27 are adjustable. A rear carrier 29 is fixedly disposed on the rear side of the seat 27.

A crank shaft 33 having crank pedals 32, 32 provided at both ends thereof is rotatably supported on the motor unit 31. An endless chain 36 is wound around a drive sprocket 34 and a driven sprocket 35. The drive sprocket 34 receives a power from the crank shaft 33 and it also receives an assist force from the motor 30. The driven sprocket 35 is provided on an axle of the rear wheel W_{R}.

The operation of the motor 30 is controlled by a controller 37 which is fixedly supported on a lower portion of the body frame 21 in front of the motor unit 31. The controller 37 controls the operation of the motor 30 on the basis of the rotational speed of the motor 30 and an input torque of the input pedals 32, 32.

A front basket 38 is mounted on the head pipe 22 through a bracket 43. A battery containing case 39 disposed on a back surface portion of the front basket 38 is also mounted on the bracket 43. A battery 40-for supplying a power to the motor 30 is insertably/removably contained in the battery containing case 39.

Most of the body frame 21 is covered with a cover 41, and a main switch 42 is disposed on an upper portion of the cover 41. The main switch 42 is operated to supply a power from the battery 40 to the controller 37 and the motor 30.

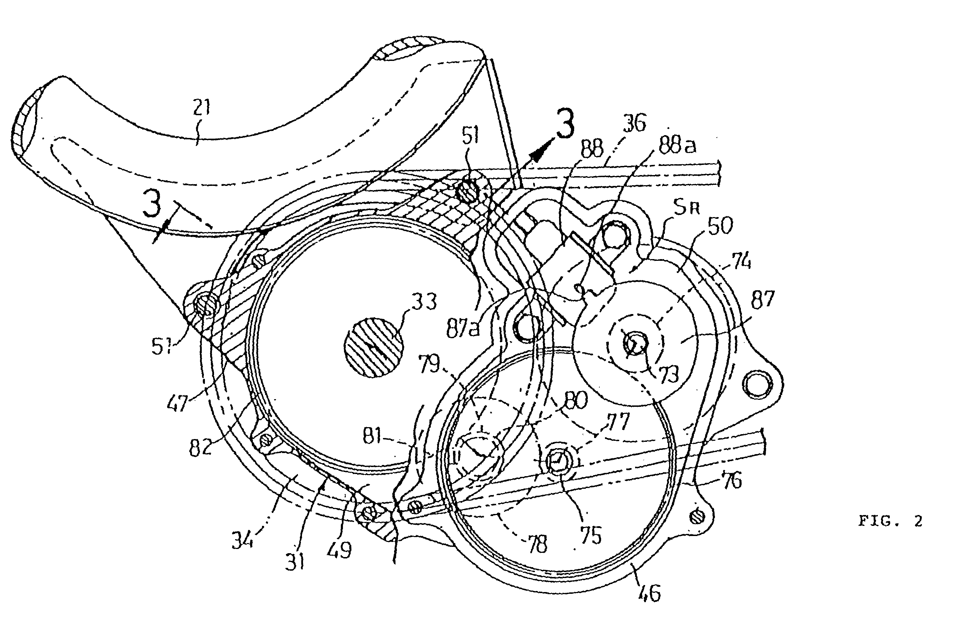

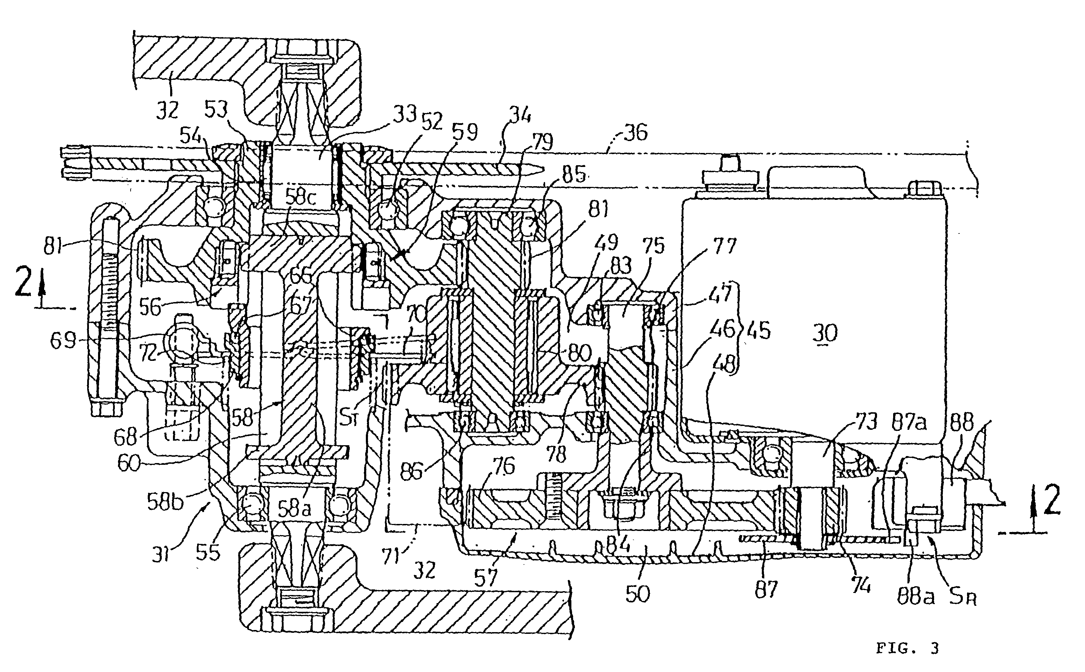

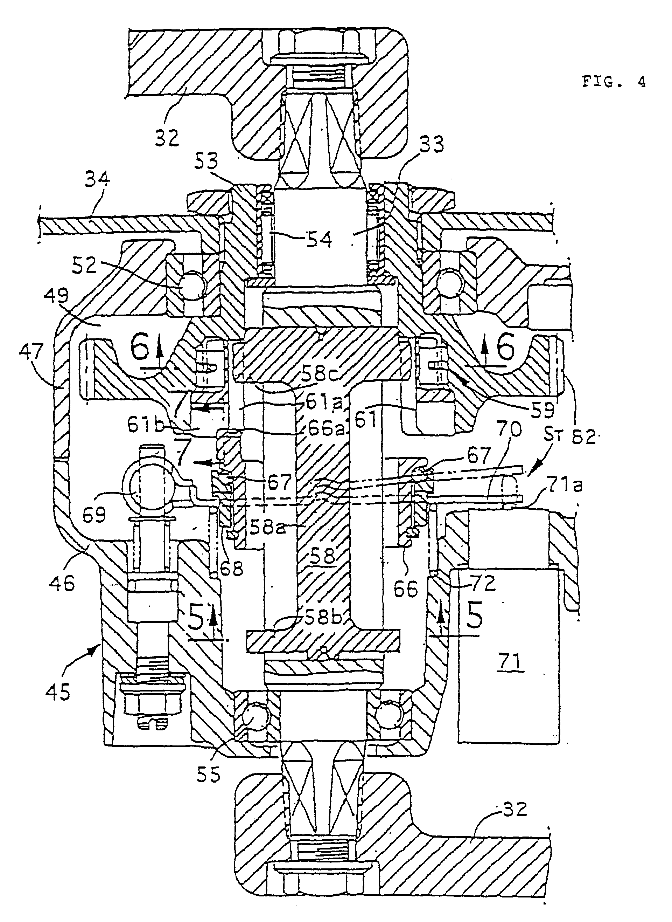

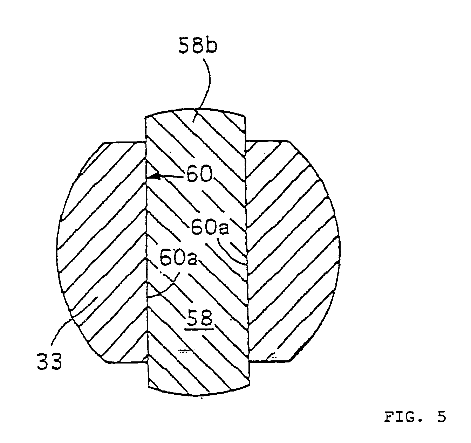

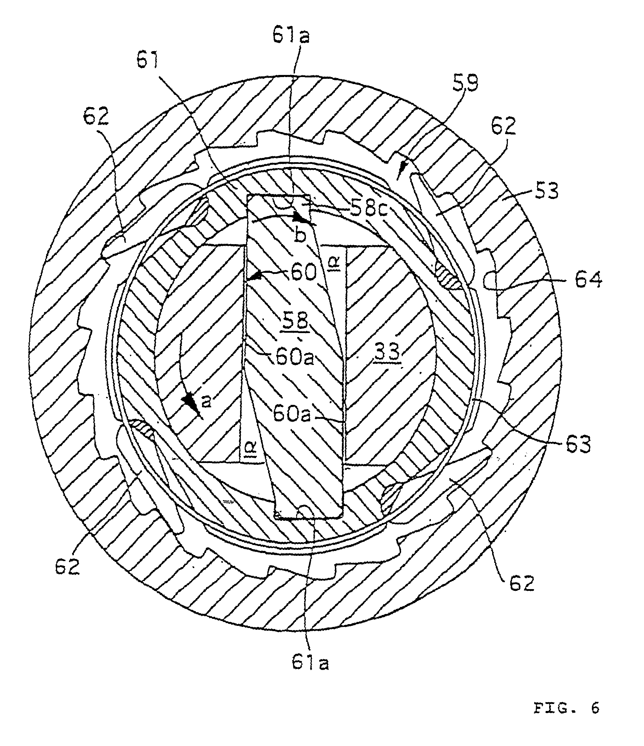

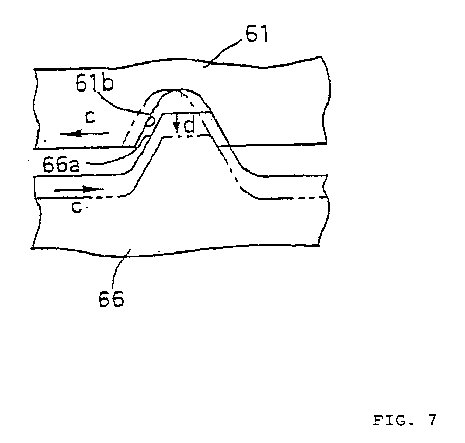

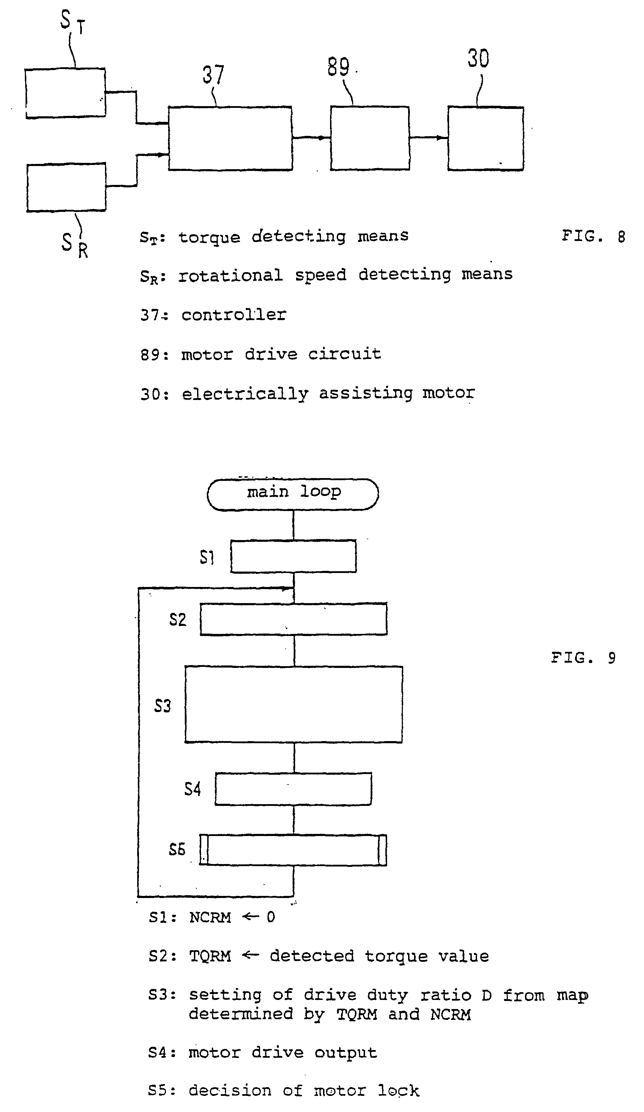

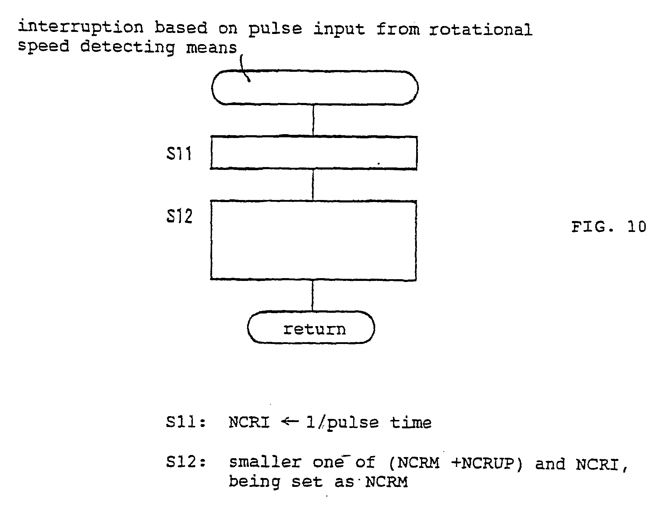

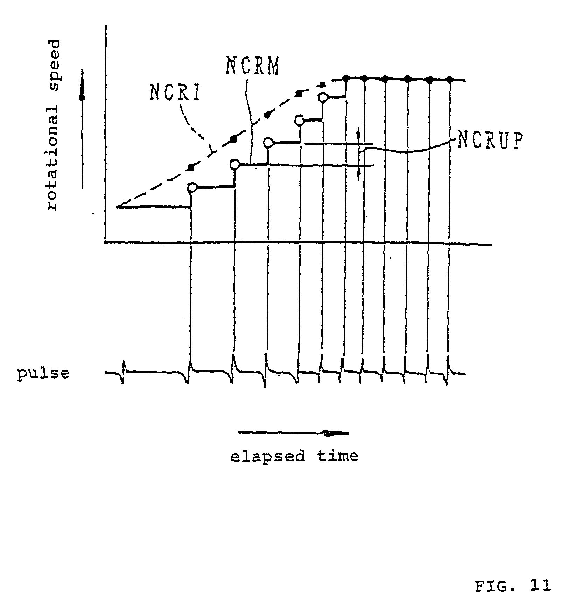

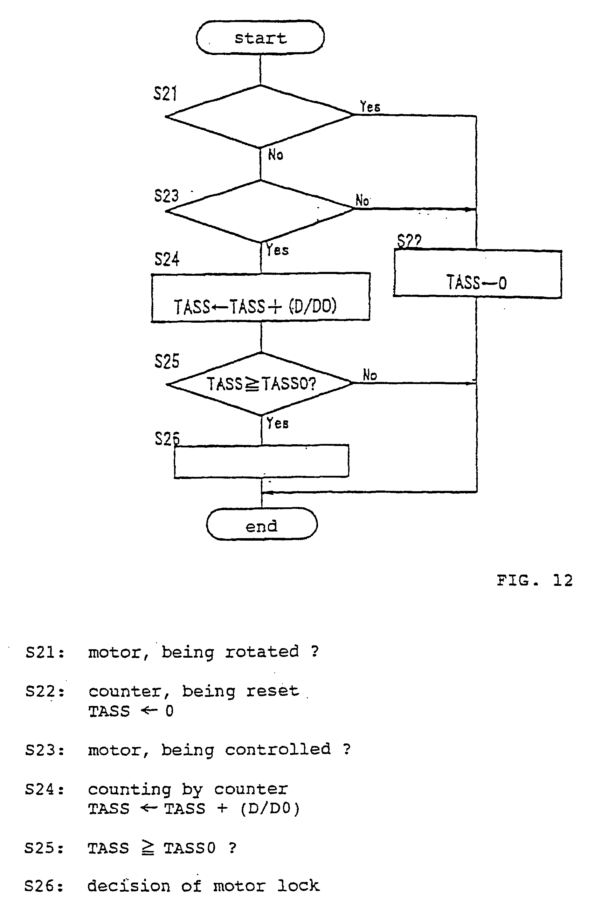

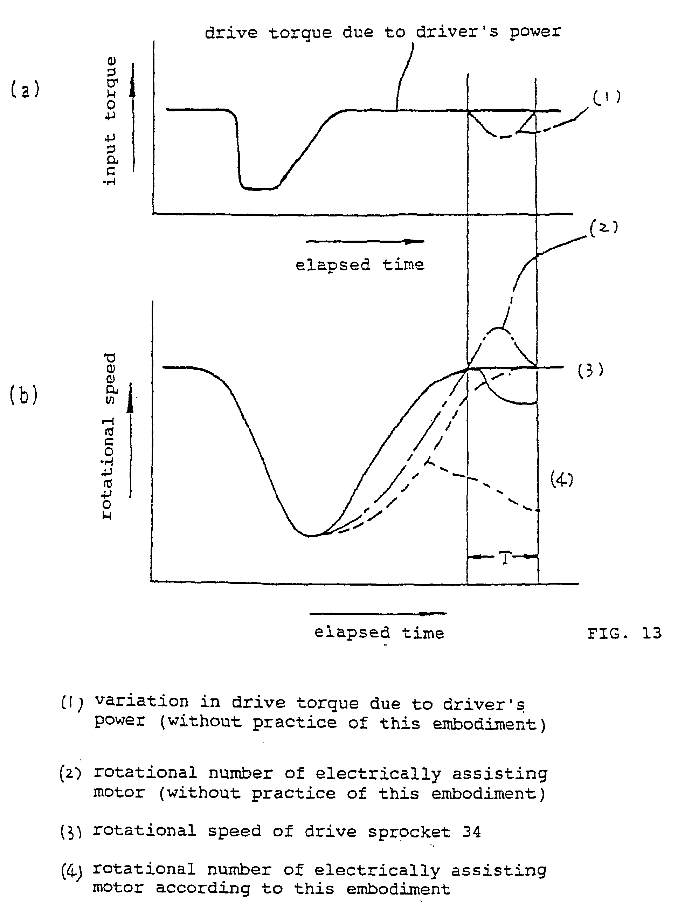

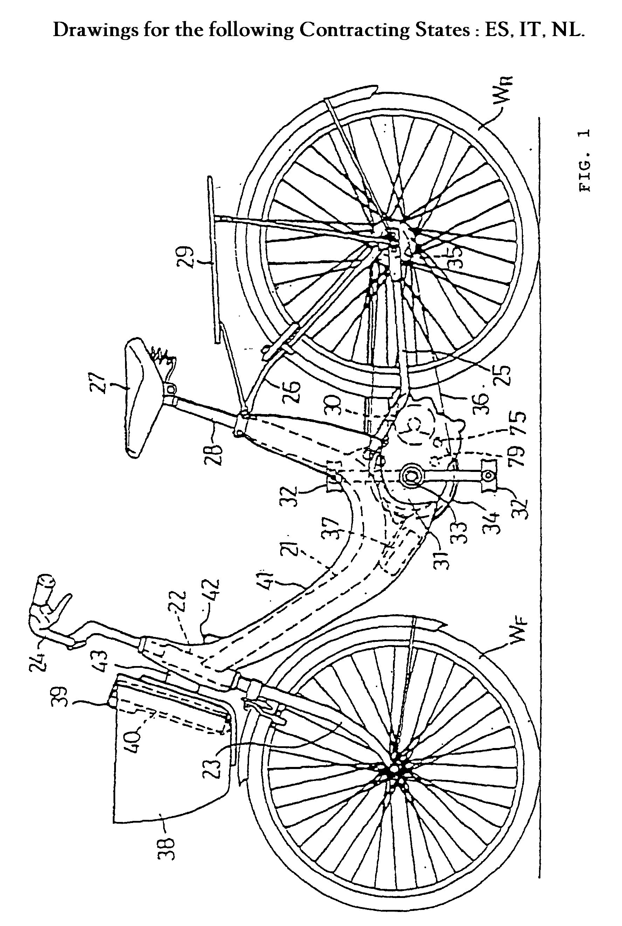

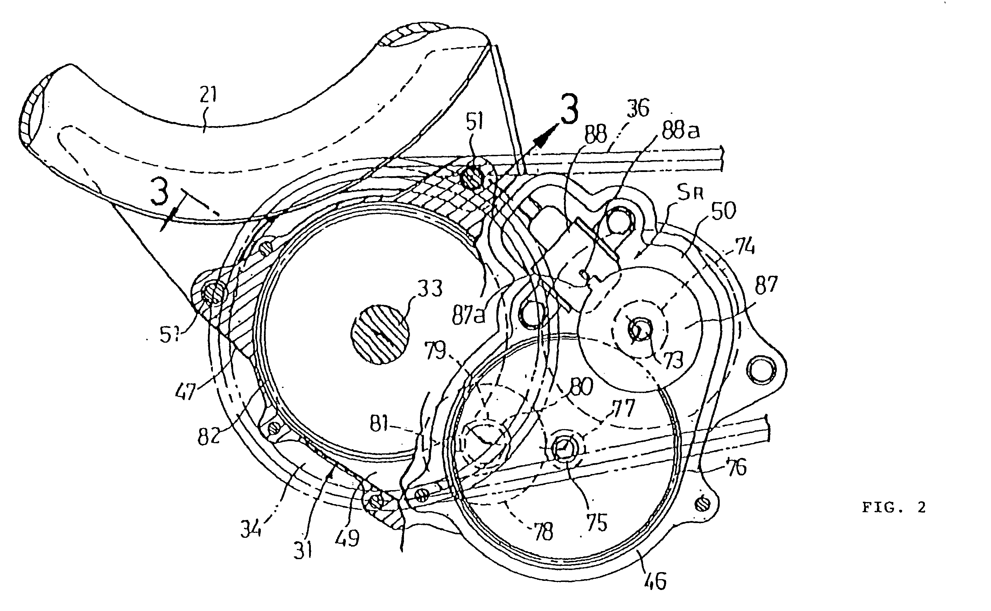

Referring to Figs. 2 to 4, a casing 45 of the motor unit 31 is composed of a left casing half 46, a right casing half 47, and a cover 48. The right casing half 47 is joined to the left casing half 46 with a first containing chamber 49 put therebetween. The cover 48 is joined to the left casing half 46 with a second containing chamber 50 put therebetween. The left and right casing halves 46, 47 are co-fastened to a lower portion of the body frame 21 with a pair of bolts 51, 51.

The crank shaft 33 is rotatably mounted on and supported by the casing 45 while being mostly disposed in the first containing chamber 49. A right end portion of the crank shaft 33 is supported on an inner periphery of a rotating cylinder 53 as a power transmission member which is mounted to and supported by the right casing half 47 through a ball bearing 52. A left end portion of the crank shaft 33 is mounted to and supported by the left casing half 46 through a ball bearing 55. A drive sprocket 34 disposed on the right side of the right casing half 47 is joined to the rotating cylinder 53.

A step-on force of the crank pedals 32, 32 mounted at the right and left ends of the crank shaft 33 is transmitted from the crank shaft 33 to the drive sprocket 34 through a first power transmission system 56. An output of the motor 30 mounted to the casing 45 is transmitted to the drive sprocket 34 through a second power transmission system 57 for assisting the step-on force of the crank pedals 32, 32.

The first power transmission system 56 for transmitting a power of the crank shaft 33 to the drive sprocket 34 is disposed in the first containing chamber 49, and is composed of a torsion bar 58 connected to the crank shaft 33 and a first one-way clutch 59 disposed between the rotating cylinder 53 and the torsion bar 58.

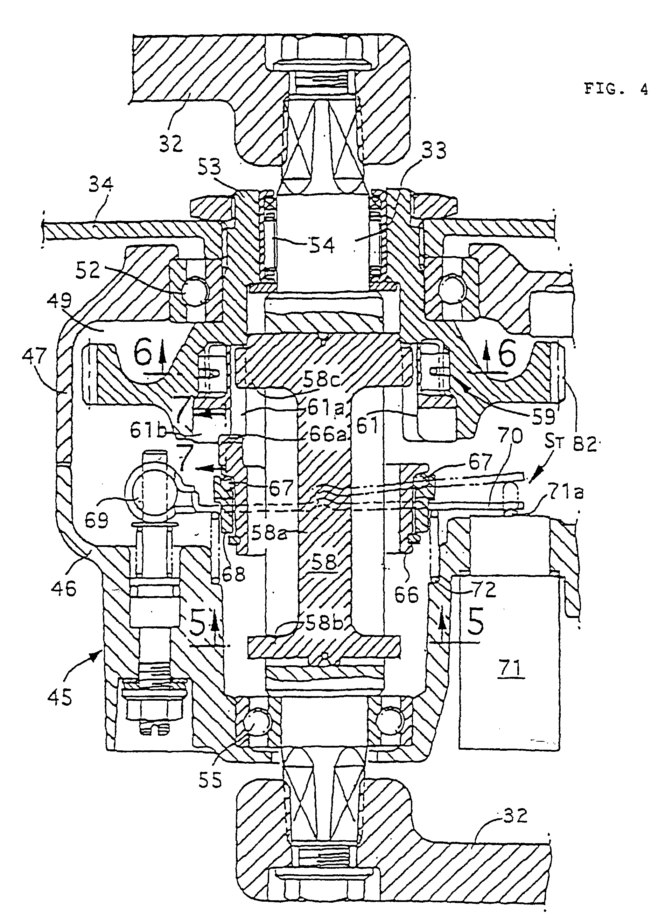

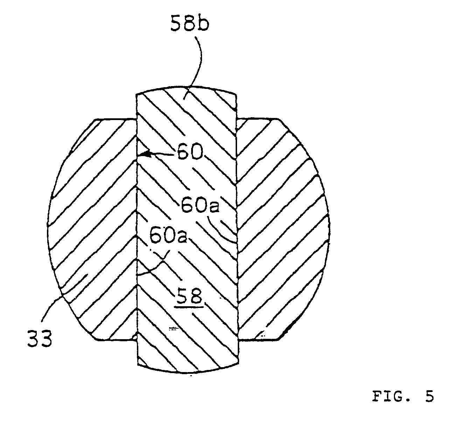

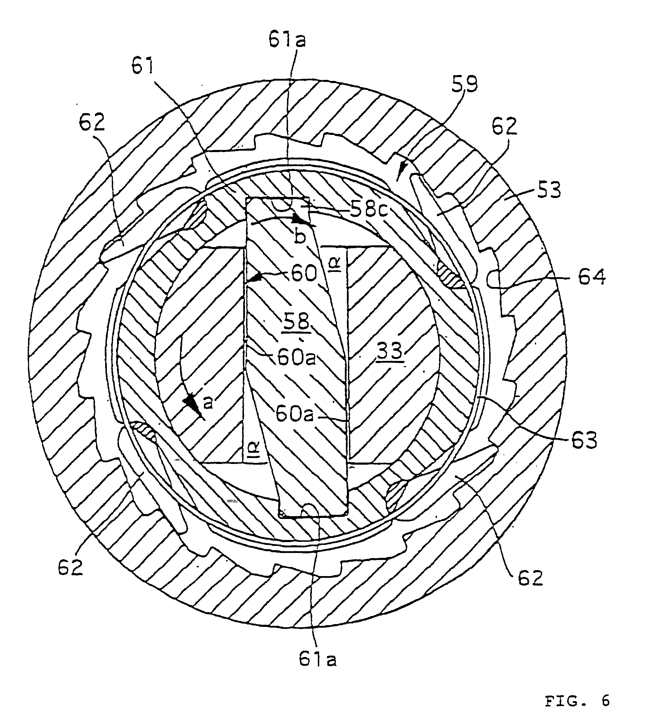

Referring to Figs. 5, 6, the crank shaft-33 has a slit 60 extending along the axial line of the crank shaft 33, and the torsion bar 58 is mounted in the slit 60. The torsion bar 58 has a columnar shaft portion 58a, an arm portion 58b, and an arm portion 58c. The shaft portion 58a is rotatably fitted between right and left inner wall surfaces 60a, 60a of the slit 60. The arm portion 58b projects from a left end (lower end in Fig. 4) of the shaft portion 58 to both sides thereof. The arm 58c projects from a right end (upper end in Fig. 4) of the shaft portion 58a to both sides thereof.

One arm portion 58b of the torsion bar 58 is integrally joined to the crank shaft 33 in such a manner as to be tightly fitted with the right and left inner wall surfaces 60a, 60a of the slit 60. The other arm portion 58c of the torsion bar 58 is loosely fitted in the slit 60 with gaps α, α put between the right and left inner wall surfaces 60a, 60a and the arm portion 58c. The shaft portion 58a of the torsion bar 58 can be torsionally deformed within a range in which the arm portion 59c is loosely moved a distance equivalent to the gaps α, α.

The first one-way clutch 59 includes a clutch inner ring 61, a rotating cylinder 53, and a plurality of (for example, four pieces of) rachet claws 62, .., 62. The clutch inner ring 61 coaxially surrounds the crank shaft 33 in such a manner as to be rotated relatively to the crank shaft 33. The rotating cylinder 53, which functions as a clutch outer ring, coaxially surrounds the clutch inner ring 61. The claws 62, ..., 62 are pivotably supported on an inner periphery of the clutch inner ring 61 and biased by an annular spring 63 in the direction where the claws 62, ..., 62 are opened. Both ends of the arm portion 58c of the torsion bar 58 are fitted in a pair of recessed portions 61a, 61a provided in an inner peripheral portion of the clutch inner ring 61, and rachet teeth 64 to be engaged with the rachet claws 62, ..., 62 are formed on an inner periphery of the rotating cylinder 53.

Such a first one-way clutch 59 has the following function. When the crank shaft 33 is normally rotated by stepping-on of the crank pedals 32, 32, a torque of the crank shaft 33 is transmitted to the drive sprocket 34 through the torsion bar 58, first one-way clutch 59, and rotating cylinder 53. Besides, when the crank shaft 33 is reversely rotated by stepping-on of the crank pedals 32, 32, the first one-way clutch 59 slips to allow reverse rotation of the crank shaft 33.

When a torque in the direction shown by an arrow "a" of Fig. 6 is inputted from the crank pedals 32, 32 to the crank shaft 33, the clutch inner ring 61 to which a load of the rear wheel W_{R} is transmitted through the rotating cylinder 53 and rachet claws 62, ..., 62 withstands against the torque in the direction "a", so that the arm portion 58c of-the torsion bar 58 is torsionally deformed in the direction shown by an arrow "b" with respect to the crank shaft 33, that is, it is rotated relatively to the crank shaft 33. As a result, a relative rotation corresponding to the torque inputted to the crank shaft 33 is generated between the crank shaft 33 and the clutch inner ring 61.

A slider inner 66 is supported on an outer periphery of the crank shaft 33 in such a manner that it is allowed not to be relatively rotated but to be relatively moved in the axial direction. A slider outer 68 is relatively rotatably supported on an outer periphery of the slider inner 66 through a plurality of balls 67, ..., 67.

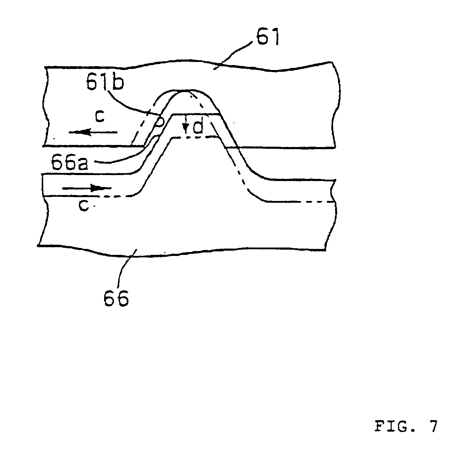

As shown in Fig. 7, a recessed cam face 61b is provided at an end surface of the clutch inner ring 61 of the first one-way clutch 59 on the slider inner 66 side, and a projecting cam face 66a to be engaged with the cam face 61b is provided on the slider inner 66.

A detecting lever 70 is provided with a base end portion thereof rockably supported on the left casing half 46 through a fulcrum pin 69. An intermediate portion of the detecting lever 70 is brought in contact with the slider outer 68 from the side opposed to the clutch inner ring 61. A stroke sensor 71 constituting a torque detecting means S_{T} in co-operation with the detecting lever 70 is mounted on the left casing half 46. A leading end of the detecting lever 70 is brought in contact with a probe 71a of the stroke sensor 71. A spring 72 is contractedly provided between the detecting lever 71 and the left casing half 46. The detecting lever 71 is brought in elastic-contact with the slider outer 68 by a biasing force of the spring 72, so that the slider outer 68 and the slider inner 66 are biased to the clutch inner ring 61 side.

When the torsion bar 58 is torsionally deformed depending on a torque supplied from the crank pedals 32, 32 to the crank shaft 33, the slider inner 66 is rotated relatively to the clutch inner ring 61 in the direction shown by an arrow "c" as shown in Fig. 7 and thereby the cam face 66a of the slider inner 66 is pushed against the cam face 61b of the clutch inner ring 61. As a result, the slider inner 66 is slid against the biasing force of the spring 72 in the axial line of the crank shaft 33, that is, in the direction shown by an arrow "d", so that the detecting lever 70 pushed by the slider outer 68 moved together with the slider inner 66 is rocked around the fulcrum pin 69, and the probe 71a of the stroke sensor 71 is pressed by the detecting lever 70. The stroke of the probe 71a is proportion to the torsional amount of the torsion bar 58, that is, the torque inputted from the crank pedals 32, 32. The input torque is thus detected by the torque detecting means S_{T}.

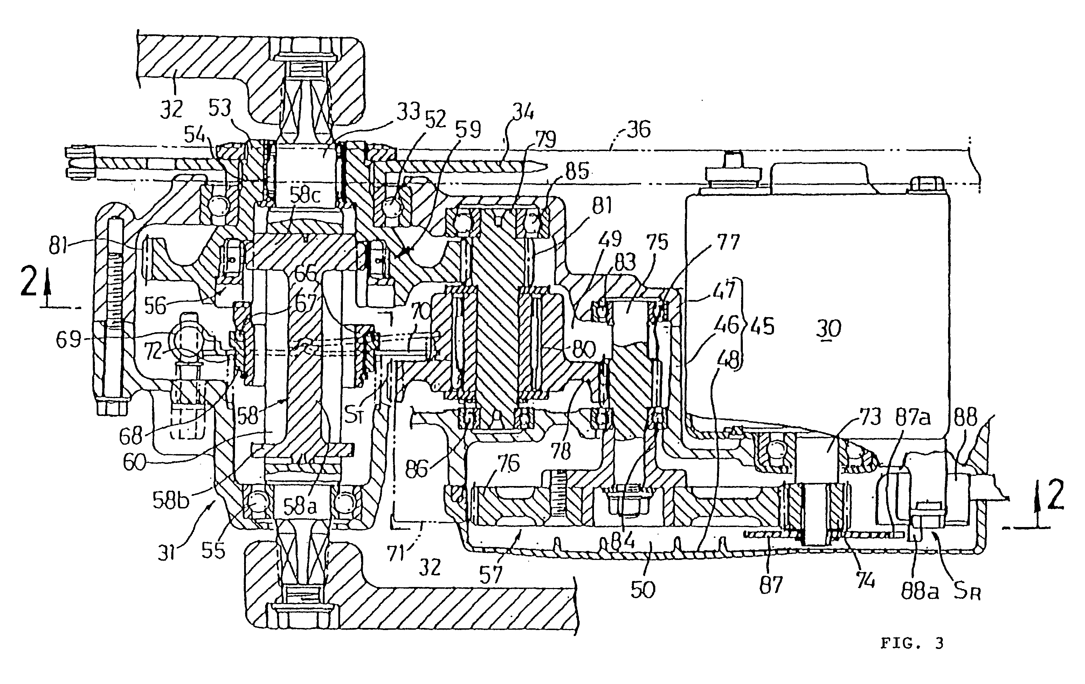

Referring again to Figs. 2, 3, the second power transmission system 57 for transmitting a power of the motor 30 to the drive sprocket 34 includes a drive gear 74, a first intermediate gear 76, a second intermediate gear 77, a third intermediate gear 78, a second idle shaft 79, a second one-way clutch 80, a fourth intermediate gear 81, and a drive gear 82. The drive gear 74 is fixed to a rotating shaft 73 of the motor 30 in the second containing chamber 50. The first intermediate gear 76 is fixed on one end of a first idle shaft 75 in the second containing chamber 50 and it meshes the drive gear 74. The second intermediate gear 77 is integrally provided on the first idle shaft 75 in the first containing chamber 49. The third intermediate gear 78 meshes the second intermediate gear 77. The second idle shaft 79 is provided coaxially with the third intermediate gear 78. The second one-way clutch 80 is provided between the third intermediate gear 78 and the second idle shaft 79. The fourth intermediate gear 81 is integrally provided on the second idle shaft 79 in the first containing chamber 49. The driven gear 82 is integrally provided on the rotating cylinder 53 joined to the drive sprocket 34 and it meshes the fourth intermediate gear 81.

The first idle shaft 75 has an axial line parallel to the rotating shaft 73 of the motor 30. A ball bearing 83 is interposed between the right casing half 47 and the first idle shaft 75, and a ball bearing 84 is interposed 75. The second idle shaft 79 has an axial line parallel to the first idle shaft 75. A ball bearing 85 is interposed between the right casing half 47 and the second idle shaft 79, and a ball bearing 86 is interposed between the left casing half 46 and the second idle shaft 79.

The second power transmission system 57 reduces a torque obtained by operation of the motor 30 and transmits the reduced torque to the drive sprocket 34. When the operation of the motor 30 is stopped, the second one-way clutch 80 acts to allow idling of the second idle shaft 79, so that the rotation of the drive sprocket 34 due to a step-on force of the crank pedals 32, 32 is not affected by stoppage of the motor 30.

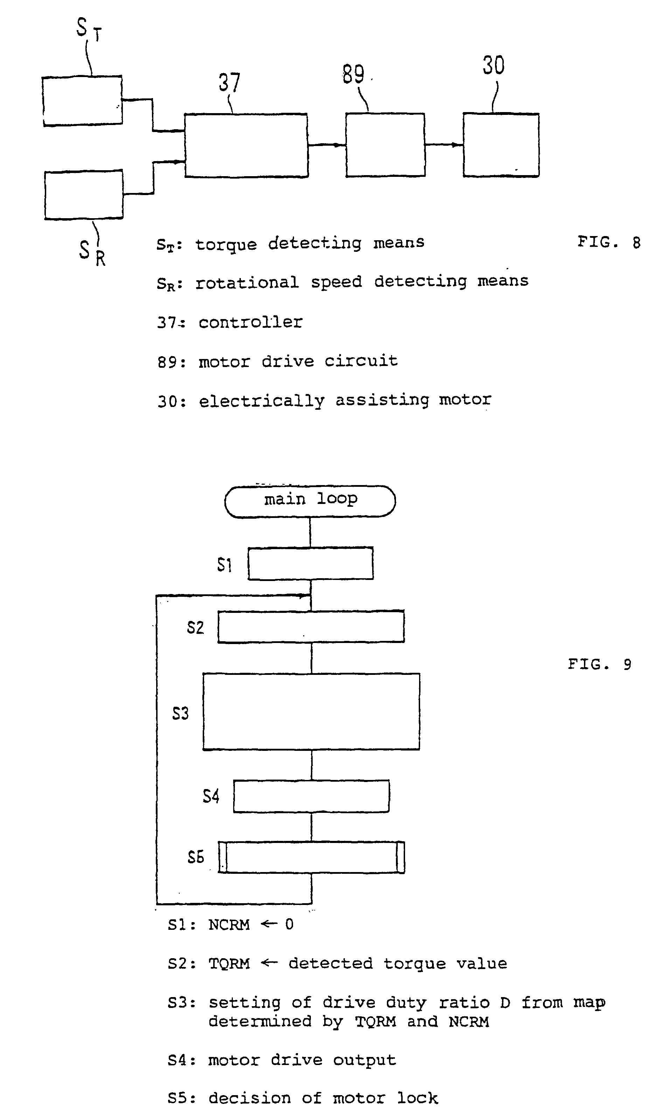

Referring to Fig. 8, a motor drive circuit 89 for driving the motor 30 is controlled by the controller 37. The controller 37 receives a detected value of a rotational speed detecting means S_{R} as well as a detected value of the torque detecting means S_{T}, and outputs a signal for controlling operation of the motor 30 on the basis of the detected values of both the detecting means S_{T}, S_{R}.

The rotational speed detecting means S_{R} detects a rotational speed which is representative of a bicycle speed in a state that the power of the bicycle is assisted by the motor 30. As shown in Figs. 2, 3, the rotational speed detecting means S_{R} is composed of a reluctor 87 as a detected portion, and a sensor 88 of an electromagnetic pick-up coil type. The reluctor 87, which has a projecting portion 87a positioned on an outer periphery thereof, is fixed on the rotating shaft 73 of the motor 30. In addition, the rotating shaft 73 of the motor 30 serves as a rotating member constituting part of the second power transmission system 57 between the motor 30 and the second one-way clutch 80. The sensor 88, which has a detecting portion 88a capable of being opposed to and moved closer to the projecting portion 87a, is fixed on the left casing half 46 of the casing 45.

Each time the projecting portion 87a is detected by the detecting portion 88a, the rotational detecting means S_{R} outputs a signal. In other words, it outputs a pulsed signal with time gaps corresponding to the rotational speed of the rotating shaft 73.

Incidentally, the controller 37 carries out a duty control of the motor 30 in accordance with a main routine shown in Fig. 9. First, at step S1 in Fig. 9, a rotational speed NCRM is set at [0]. The process goes on to step S2 at which a detected value of the torque detecting means S_{T} is set at an input torque TQRM.

At the next step S3, a drive duty ratio D is set on the basis of a map determined depending on the rotational speed NCRM and input torque TQRM. In addition, the map is set such that the drive duty ratio D becomes larger with an increase in rotational speed NCRM and it also becomes larger with an increase in input torque TQRM.

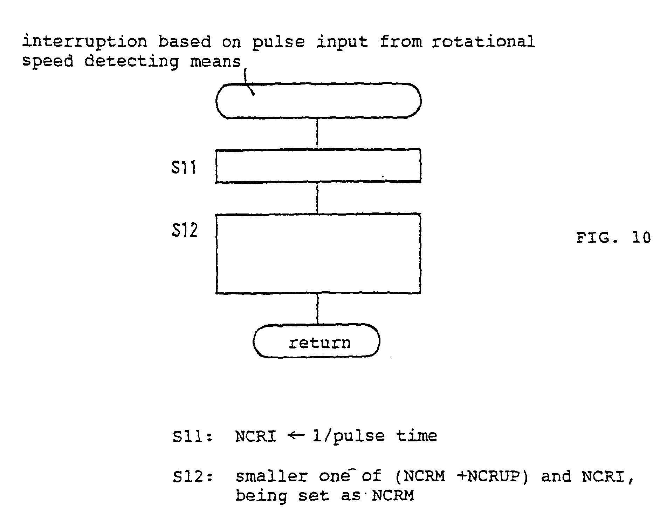

As shown in Fig. 10, the rotational speed NCRM is calculated by interruption handling on the basis of pulse input from the rotational speed detecting means S_{R}. At step S11 of Fig. 10, a detected rotational speed NCRI of the rotational speed detecting means S_{R} is calculated as (1/pulse time). The process goes on to step S12 at which it is decided whether or not the detected rotational speed NCRI is smaller than a value (NCRM + NCRUP) obtained by addition of a setting value NCRUP to the previous rotational speed NCRM, and the smaller value is selected as the present rotational speed NCRM.

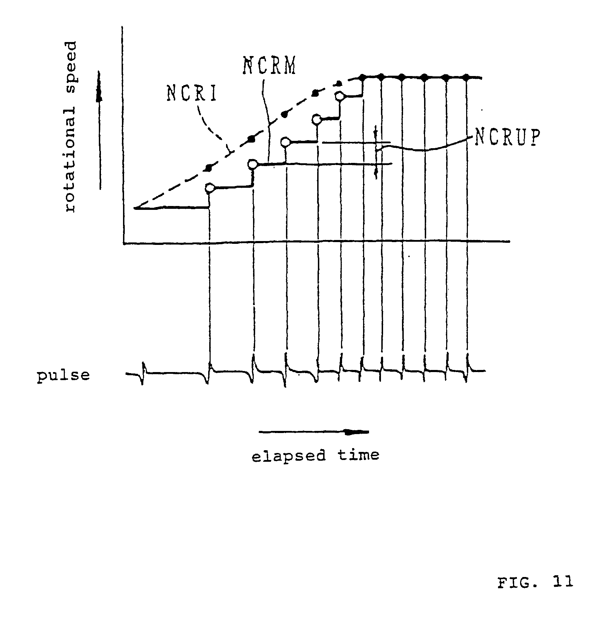

Specifically, when the detected rotational speed NCRI corresponding to pulse input from the rotational speed detecting means S_{R} is varied to exceed a value obtained by addition of the setting value NCRUP to the rotational speed at the time of'the previous pulse input as shown by a broken line of Fig. 11, the value obtained by addition of the setting value NCRUP to the previous rotational speed is used as the present rotational speed NCRM for controlling operation of the motor 30 as shown by a solid line In Fig. 11. As a result, in the case of controlling operation of the motor 30, a variation in rotational speed NCRM is restricted to be less than the setting value NCRUP.

Referring again to Fig. 9, at step S4 after setting the drive duty ratio at step S3, the control of operation of the motor 30 using the drive duty ratio D thus set at step S3 is carried out.

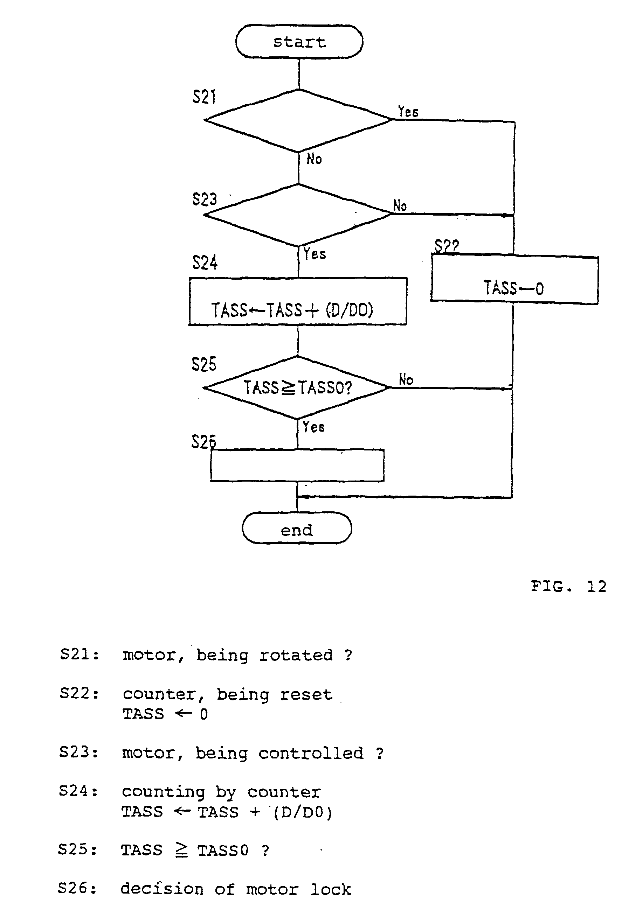

The process goes on from step S4 to step S5 at which decision of motor lock is carried out in accordance with a sub-routine shown in Fig. 12. At step S21 in Fig. 12, it is decided whether or not the motor is being rotated. If the motor is being rotated, a counter is reset, that is, a count value TASS is set at [0] at step S22. If the motor is not rotated, that is, any detected value is not obtained by the rotational speed detecting means S_{R}, it is decided whether or not the motor is being controlled at step S23. If the motor is not controlled, the process is returned from step S23 to step S22 at which the counter is reset.

If it is decided at step S23 that the motor is being-controlled, that is, the motor 30 is in the stoppage state although it is being controlled, the process goes on to step S24 at which counting is carried out by the counter such that the count value TASS is set as a value obtained by addition of an additional value (D/D0) to the previous count value TASS. The additional value (D/D0) is obtained by dividing the present drive duty ratio D by a specific drive duty ratio D0, so that it becomes larger in proportion to the present drive duty ratio D. As a result, when the present drive duty ratio D is large, the counting is quickened, that is, the count value becomes larger.

The process goes on from step S24 to step S25 at which it is decided whether or not the count value TASS is a specific value TASS0 or more. If TASS≧TASS0, it is decided at step S26 that the motor 30 is in the lock state.

According to the above decision of motor lock, when the motor 30 is accidentally in the lock state, the lock state is decided more quickly for the motor 30 having a larger drive duty ratio D. More concretely, in the lock state of the motor 30, if the drive duty ratio D is large, a current applied to the motor 30 becomes large, so that the lock state of the motor 30 can be decided for a time corresponding to the applied current, with a result that burning or the like of electric circuits relating to the motor 30 can be effectively prevented.

The function of this embodiment will be described below. When the crank pedals 32, 32 are operated by a rider for running of the motor-assisted bicycle, a power of the crank shaft 33 is transmitted to the drive sprocket 34 through the first power transmission system 56, and further it is transmitted to the rear wheel W_{R} through the chain 36 and the driven sprocket 35.

An input torque generated by the crank pedals 32, 32 is detected by the torque detecting means S_{T}. Further, a rotational speed of the motor 30, which is representative of the bicycle speed, is detected by the rotational speed detecting means S_{R}. And, an assisting power is supplied from the motor 30 to the rear wheel on the basis of the detected values of both the detecting means S_{T}, S_{R} for reducing the load of the rider.

In such a motor-assisted bicycle, the rotational speed detecting means S_{R} is composed of the reluctor 87 fixed on the rotating shaft 73 of the motor 30 which constitutes part of the second power transmission system 57 between the motor 30 and the second one-way clutch 80, and the sensor 88 mounted on the casing 45. As compared with a related art means in which the rotational speed of the rotating cylinder 53 is detected, the rotational speed detecting means S_{R} is advantageous in that since the rotational speed of the rotating shaft 73 is larger than the rotational speed of the rotating cylinder 53, the sizes of the rotational speed detecting means S_{R} and the casing 45 can be reduced using the reluctor 87 having a relatively small size; and a relatively inexpensive electromagnetic pick-up type sensor 88 can be used without use of an expensive semiconductor device such as a Hall device, resulting in the reduced cost.

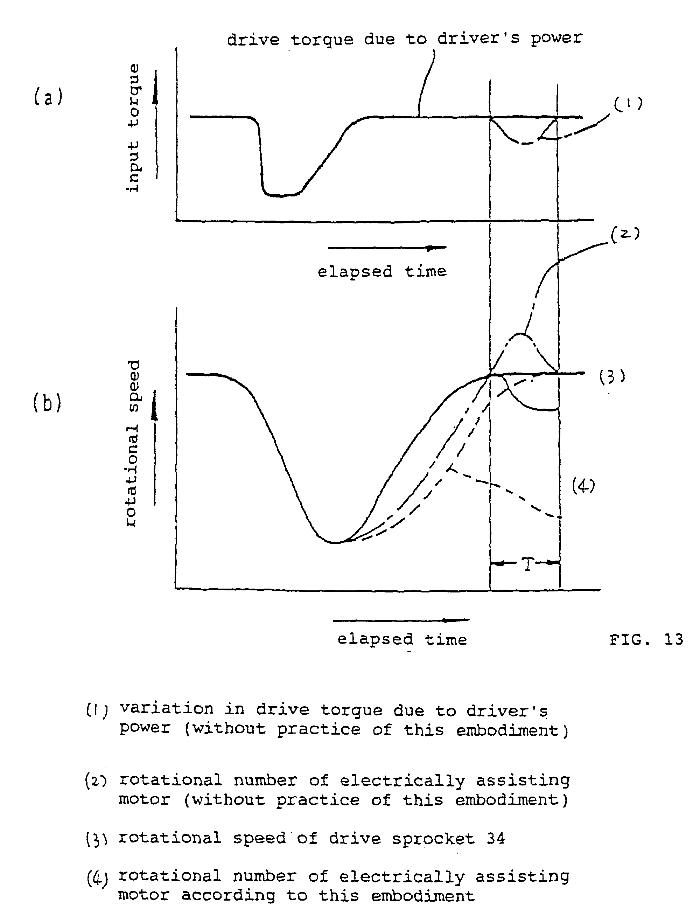

Incidentally, the rotational speed detecting means S_{R} is disposed on the second power transmission system 57 at a position offset to the motor 30 side from the second one-way clutch 80. Accordingly, if the motor 30 is controlled using a detected value obtained by the rotational speed detecting means S_{R} as it is, there arises an inconvenience that when an input torque is reduced in the state the power is assisted by the motor 30, there occurs hunting of the rotation of the motor 30, which gives a shock due to the loosened stepping-on of the crank pedals to the rider of the motor-assisted bicycle. Specifically, as shown in Fig. 13(a), when the stepping-on of the crank pedals 32, 32 is stopped once and then performed again, the rotational speed of the motor 30 is made small accompanied by the reduced stepping-on torque, and thereby the second one-way clutch 80 of the second power transmission system 57 is cut off. Thus, the rotational speed of the motor 30 is made smaller as shown by a dashed line of Fig. 13(b) and is increased with a time-lag from an increase in rotational speed of the drive sprocket 34. At this time, since the rotational speed of the motor 30 is transmitted to the drive sprocket 34 through the second one-way clutch 80, it may be larger than the rotational speed of the drive sprocket 34 for a certain period of time T. Accordingly, if the motor 30 is being controlled using a detected value obtained by the rotational speed detecting means S_{R} as it is, the drive duty ratio D is set to be larger than a value corresponding to the actual rotational speed of the drive sprocket 34. Consequently, after the second one-way clutch 80 is turned on, a shock due to the loosened stepping-on of the crank pedals is given to the rider of the motor-assisted bicycle as shown by the dashed line of Fig. 13(a), and the motor-assisted bicycle is temporarily accelerated by increasing the rotational speed of each rotating member continuous to the second one-way clutch 80. After that, the drive torque becomes stationary.

On the contrary, in this embodiment, since the controller 37 restricts a variation in the rotational speed NCRM used for controlling operation of the motor 30 to be the setting value NCRUP or less, the increasing rate of the rotational- speed of the rotating shaft 73 which increases with a time-lag from an increase in the stepping-on torque is relatively low as shown by a broken line of Fig. 13(b) because the drive duty ratio D of the motor 30 is set at a relatively low value. Accordingly, when the second one-way clutch 80 is turned on, the rotational speed is smoothly shifted to a value corresponding to the stationary bicycle speed without giving a shock due to the loosened stepping-on of the crank pedals to the rider of the motor-assisted bicycle.

For example, the relative positional relationship between the reluctor 87 and the sensor 88 of the rotational detecting means S_{R} is not limited to that shown in Figs. 2, 3; and the reluctor 87 and the sensor 88 may be contained in the motor 30.

The invention provides a motor-assisted bicycle in which a first power transmission system having a first one-way clutch is provided between a crank shaft having crank pedals at both ends thereof and a power transmission member for transmitting a power to a rear wheel, and a second power transmission system having a second one-way clutch is provided between an electrically assisting motor and the power transmission member, wherein operation of the motor is controlled by a control unit on the basis of detected values obtained by a rotational speed detecting means and a torque detecting means, and a rotational speed representative of a bicycle speed in a state in which an assisting force is applied from the motor to the rear wheel can be detected using an inexpensive, small-sized detecting means, and wherein a rotational speed representative of a bicycle speed can be detected using an inexpensive, small-sized detecting means and the motor can be smoothly controlled.

Therefore, in the controller for controlling operation of an electrically assisting motor 30 on the basis of detected values of a rotational speed detecting means S_{R} for detecting a rotating speed of a rotating member 73 provided between the motor 30 and a second one-way clutch 80 and a torque detecting means S_{T}, when a rotational speed detected by the rotational detecting means S_{R} is varied to exceed a value obtained by addition of a setting value to the previous rotational speed, the value obtained by addition of the setting value to the previous rotational speed is used as the present rotational speed for controlling operation of the motor 30. The rotational speed detecting means S_{R} is composed of a portion 87 to be detected which is provided on a rotating member 73 constituting part of a second power transmission system 57 between an electrically assisting motor 30 and a second one-way clutch 80, and a sensor 88 for detecting a rotational speed of the portion 87 to be detected.

### Description for the following Contracting States : ES, IT, NL.

The present invention relates to a motor-assisted bicycle, in which a first power transmission system'having a first one-way clutch is provided between a crank shaft rotatably supported by a casing supported on a body frame and having crank pedals at both ends thereof and a power transmission member for transmitting a power to a rear wheel; and a second power transmission system having a second one-way clutch is provided between an electrically assisting motor fixedly mounted on the casing and the power transmission member, wherein the motor-assisted bicycle has an improved motor control device for controlling operation of the motor-assisted bicycle. In particular, the present invention relates to a motor-assisted bicycle in which operation of an electrically assisting motor is controlled by a controller on the basis of a detected value obtained by a rotational speed detecting means for detecting a rotational speed representative of a bicycle speed in a state that the power is assisted by the motor, and a detected value obtained by a torque detecting means for detecting an-input torque of the crank pedals.

The motor-assisted bicycle of this type has been known, for example, from Japanese Patent Laid-open No. Hei 7-40878.

In the above-described related art motor-assisted bicycle, a rotational speed detecting means for detecting a bicycle speed in a state in which an assisting force is applied from an electrically assisting motor to a rear wheel is provided on a portion connected to a power transmission member provided coaxially with a crank shaft. Specifically, an outer gear of a planetary gear mechanism constituting part of a first power transmission system is connected to the power transmission member, and outer teeth of the outer gear is taken as a portion to be detected and a sensor for detecting such a portion is fixed on a casing. However, in a state in which an assisting force is applied from the motor to the power transmission member, the rotational speed of the power transmission member, which is detected in the related art motor-assisted bicycle, is lower than that of the motor. As a result, according to the related art motor-assisted bicycle, the outer gear having a relatively large diameter is required to be used as a portion to be detected as described above, and also a relatively expensive semiconductor device such as a Hall device is required to be used for enhancing the detection accuracy. This causes a problem in increasing not only the size of the rotational speed detecting means but also the size of the casing, resulting in the increased cost.

EP-A-559 231 discloses a motor-assisted bicycle according to the preambles of claims 1 and 3.

In view of the foregoing, the present invention has been made, and an object of the present invention is to provide a motor-assisted bicycle capable of detecting a rotational speed representative of a bicycle speed using an inexpensive, small-sized detecting means.

Another object of the present invention is to provide a motor-assisted bicycle including a control device for controlling a motor of a motor-assisted bicycle, which is capable of detecting a rotational speed representative of a bicycle speed using an inexpensive, small-sized detecting means and smoothly controlling operation of the motor.

To achieve the above object, according to an invention described in claim 1, there is provided a motor-assisted bicycle, in which a first power transmission system having a first one-way clutch is provided between a crank shaft rotatably supported by a casing supported on a body frame and having crank pedals at both ends thereof and a power transmission member interlocked with a rear wheel; and a second power transmission system having a second one-way clutch is provided between an electrically assisting motor fixedly mounted on the casing and the power transmission member, wherein the operation of the motor is controlled by a controller on the basis of a detected value obtained by a rotational speed detecting means for detecting a rotational speed representative of a bicycle speed in a state that the power is assisted by the motor, and a detected value obtained by a torque detecting means for detecting an input torque of the crank pedals; and the rotational speed detecting means includes a portion to be detected which is provided on a rotating member constituting part of the second power transmission system between the motor and the second one-way clutch; and a sensor for detecting a rotational speed of the portion to be detected.

As described above, according to the invention, a rotational speed detecting means is composed of a portion to be detected which is provided on a rotating member constituting part of a second power transmission system between an electrically assisting motor and a second one-way clutch, and a sensor for detecting a rotational speed of the portion to be detected, so that a bicycle speed is represented by the rotational speed of the rotating member which has a relatively large rotational speed. As a result, it is possible to make relatively small a diameter of the portion to be detected and hence to reduce sizes of the rotational speed detecting means and a casing, and also to reduce the cost of the detecting means using a relatively inexpensive sensor.

In addition to the configuration of the above invention, the rotating member is a rotating shaft of the motor. As a result, it is possible to usually detect the rotational state of the motor and hence to eliminate the necessity of provision of a specialized means for detection of motor lock.

To achieve the above object, according to an invention described in claim 3, there is provided a motor-assisted bicycle, in which a first power transmission system having a first one-way clutch is provided between a crank shaft rotatably supported by a casing supported on a body frame and having crank pedals at both ends thereof and a power transmission member interlocked with a rear wheel; and a second power transmission system having a second one-way clutch is provided between an electrically assisting motor fixedly mounted on the casing and the power transmission member, wherein the motor-assisted bicycle includes: a rotational speed detecting means for detecting a rotational speed of a rotating member constituting part of the second power transmission system between the motor and the second one-way clutch; a torque detecting means for detecting an input torque of the crank pedals; and a controller for controlling operation of the motor on the basis of detected values of the detecting means; wherein when a rotational speed detected by the rotational speed detecting means is varied to exceed a value obtained by addition of a setting value to the previous rotational speed, the controller uses the value obtained by addition of the setting value to the previous rotational speed as the present rotational speed for controlling operation of the motor.

In a controller for controlling operation of the motor on the basis of detected values of the rotational speed detecting means and a torque detecting means, when a rotational speed detected by the rotational speed detecting means is varied to exceed a value obtained by addition of a setting value to the previous rotational speed, the value obtained by the addition of the setting value to the previous rotational speed is used as the present rotational speed for controlling operation of the motor. As a result, although the rotational speed of a member constituting a second power transmission system between the motor and the second one-way clutch, even if the input torque is reduced and the second one-way clutch is turned on again in a state that the power is assisted by the motor, it is possible to prevent hunting of rotation of the motor, and hence to prevent the rider of the motor-assisted bicycle from being given a shock due to the loosened stepping-on of crank pedals.

Hereinafter, one embodiment of the present invention will be described with reference to the accompanying drawings.
Fig. 1 is a side view of a motor-assisted bicycle.
Fig. 2 is a vertical sectional side view of a motor unit, which is a sectional view taken on line 2-2 of Fig. 3.
Fig. 3 is a sectional view taken on line 3-3 of Fig. 2.
Fig. 4 is an enlarged view of an essential portion of Fig. 3.
Fig. 5 is a sectional view taken on line 5-5 of Fig. 4.
Fig. 6 is a sectional view taken on line 6-6 of Fig. 5.
Fig. 7 is a view seen along arrows 7-7 of Fig. 4, showing a state in which a slider inner is engaged with a clutch inner ring.
Fig. 8 is a block diagram showing a configuration of a control device for controlling an electrically assisting motor.
Fig. 9 is a flow chart showing a main routine set by a controller.
Fig. 10 is a flow chart showing interruption handling performed by the controller.
Fig. 11 is a view illustrating the interruption handling performed in the controller.
Fig. 12 is a flow chart showing a sub-routine for decision of motor lock.
Figs. 13a, 13b are diagrams each showing a variation in rotational speed when steeping-on of crank pedals is stopped once.

Referring first to Fig. 1, there is shown a motor-assisted bicycle of the present invention, which includes a body frame 21 formed in an approximately U-shape in a side view. A front fork 23 is operably supported on a head pipe provided at a front end of the body frame 21. A front wheel W_{F} is rotatably supported on forked ends of the front fork 23. A handlebar 24 is provided on an upper end of the front fork 23. A motor unit 31 having an electrically assisting motor 30 is provided on a lower portion of the body frame 21. A pair of right and left rear forked portions 25, 25 extend rearward, downward from the body frame 21 in a space over a rear portion of the motor unit 31 and further extend substantially in the horizontal direction in a space behind the motor unit 31. A rear wheel W_{R} is rotatably supported by the rear fork portions 25, 25 while being put therebetween. A pair of right and left stays 26, 26 are provided between both the rear forked portions 25, 25 and the rear portion of the body frame 21. A seat post 28 having at an upper end thereof a seat 27 is mounted to the rear portion of the body frame 21. Upper and lower positions of the seat 27 are adjustable. A rear carrier 29 is fixedly disposed on the rear side of the seat 27.

A crank shaft 33 having crank pedals 32, 32 provided at both ends thereof is rotatably supported on the motor unit 31. An endless chain 36 is wound around a drive sprocket 34 and a driven sprocket 35. The drive sprocket 34 receives a power from the crank shaft 33 and it also receives an assist force from the motor 30. The driven sprocket 35 is provided on an axle of the rear wheel W_{R}.

The operation of the motor 30 is controlled by a controller 37 which is fixedly supported on a lower portion of the body frame 21 in front of the motor unit 31. The controller 37 controls the operation of the motor 30 on the basis of the rotational speed of the motor 30 and an input torque of the input pedals 32, 32.

A front basket 38 is mounted on the head pipe 22 through a bracket 43. A battery containing case 39 disposed on a back surface portion of the front basket 38 is also mounted on the bracket 43. A battery 40 for supplying a power to the motor 30 is insertably/removably contained in the battery containing case 39.

Most of the body frame 21 is covered with a cover 41, and a main switch 42 is disposed on an upper portion of the cover 41. The main switch 42 is operated to supply a power from the battery 40 to the controller 37 and the motor 30.

Referring to Figs. 2 to 4, a casing 45 of the motor unit 31 is composed of a left casing half 46, a right casing half 47, and a cover 48. The right casing half 47 is joined to the left casing half 46 with a first containing chamber 49 put therebetween. The cover 48 is joined to the left casing half 46 with a second containing chamber 50 put therebetween. The left and right casing halves 46, 47 are co-fastened to a lower portion of the body frame 21 with a pair of bolts 51, 51.

The crank shaft 33 is rotatably mounted on and supported by the casing 45 while being mostly disposed in the first containing chamber 49. A right end portion of the crank shaft 33 is supported on an inner periphery of a rotating.cylinder 53 as a power transmission member which is mounted to and supported by the right casing half 47 through a ball bearing 52. A left end portion of the crank shaft 33 is mounted to and supported by the left casing half 46 through a ball bearing 55. A drive sprocket 34 disposed on the right side of the right casing half 47 is joined to the rotating cylinder 53.

A step-on force of the crank pedals 32, 32 mounted at the right and left ends of the crank shaft 33 is transmitted from the crank shaft 33 to the drive sprocket 34 through a first power transmission system 56. An output of the motor 30 mounted to the casing 45 is transmitted to the drive sprocket 34 through a second power transmission system 57 for assisting the step-on force of the crank pedals 32, 32.

The first power transmission system 56 for transmitting a power of the crank shaft 33 to the drive sprocket 34 is disposed in the first containing chamber 49, and is composed of a torsion bar 58 connected to the crank shaft 33 and a first one-way clutch 59 disposed between the rotating cylinder 53 and the torsion bar 58.

Referring to Figs. 5, 6, the crank shaft-33 has a slit 60 extending along the axial line of the crank shaft 33, and the torsion bar 58 is mounted in the slit 60. The torsion bar 58 has a columnar shaft portion 58a, an arm portion 58b, and an arm portion 58c. The shaft portion 58a is rotatably fitted between right and left inner wall surfaces 60a, 60a of the slit 60. The arm portion 58b projects from a left end (lower end in Fig. 4) of the shaft portion 58 to both sides thereof. The arm 58c projects from a right end (upper end in Fig. 4) of the shaft portion 58a to both sides thereof.

One arm portion 58b of the torsion bar 58 is integrally joined to the crank shaft 33 in such a manner as to be tightly fitted with the right and left inner wall surfaces 60a, 60a of the slit 60. The other arm portion 58c of the torsion bar 58 is loosely fitted in the slit 60 with gaps α, α put between the right and left inner wall surfaces 60a, 60a and the arm portion 58c. The shaft portion 58a of the torsion bar 58 can be torsionally deformed within a range in which the arm portion 59c is loosely moved a distance equivalent to the gaps α, α.

The first one-way clutch 59 includes a clutch inner ring 61, a rotating cylinder 53, and a plurality of (for example, four pieces of) rachet claws 62, .., 62. The clutch inner ring 61 coaxially surrounds the crank shaft 33 in such a manner as to be rotated relatively to the crank shaft 33. The rotating cylinder 53, which functions as a clutch outer ring, coaxially surrounds the clutch inner ring 61. The claws 62, ..., 62 are pivotably supported on an inner periphery of the clutch inner ring 61 and biased by an annular spring 63 in the direction where the claws 62, ..., 62 are opened. Both ends of the arm portion 58c of the torsion bar 58 are fitted in a pair of recessed portions 61a, 61a provided in an inner peripheral portion of the clutch inner ring 61, and rachet teeth 64 to be engaged with the rachet claws 62, ..., 62 are formed on an inner periphery of the rotating cylinder 53.

Such a first one-way clutch 59 has the following function. When the crank shaft 33 is normally rotated by stepping-on of the crank pedals 32, 32, a torque of the crank shaft 33 is transmitted to the drive sprocket 34 through the torsion bar 58, first one-way clutch 59, and rotating cylinder 53. Besides, when the crank shaft 33 is reversely rotated by stepping-on of the crank pedals 32, 32, the first- one-way clutch 59 slips to allow reverse rotation of the crank shaft 33.

When a torque in the direction shown by an arrow "a" of Fig. 6 is inputted from the crank pedals 32, 32 to the crank shaft 33, the clutch inner ring 61 to which a load of the rear wheel W_{R} is transmitted through the rotating cylinder 53 and rachet claws 62, ..., 62 withstands against the torque in the direction "a", so that the arm portion 58c of the torsion bar 58 is torsionally deformed in the direction shown by an arrow "b" with respect to the crank shaft 33, that is, it is rotated relatively to the crank shaft 33. As a result, a relative rotation corresponding to the torque inputted to the crank shaft 33 is generated between the crank shaft 33 and the clutch inner ring 61.

A slider inner 66 is supported on an outer periphery of the crank shaft 33 in such a manner that it is allowed not to be relatively rotated but to be relatively moved in the axial direction. A slider outer 68 is relatively rotatably supported on an outer periphery of the slider inner 66 through a plurality of balls 67, ..., 67.

As shown in Fig. 7, a recessed cam face 61b is provided at an end surface of the clutch inner ring 61 of the first one-way clutch 59 on the slider inner 66 side, and a projecting cam face 66a to be engaged with the cam face 61b is provided on the slider inner 66.

A detecting lever 70 is provided with a base end portion thereof rockably supported on the left casing half 46 through a fulcrum pin 69. An intermediate portion of the detecting lever 70 is brought in contact with the slider outer 68 from the side opposed to the clutch inner ring 61. A stroke sensor 71 constituting a torque detecting means S_{T} in co-operation with the detecting lever 70 is mounted on the left casing half 46. A leading end of the detecting lever 70 is brought in contact with a probe 71a of the stroke sensor 71. A spring 72 is contractedly provided between the detecting lever 71 and the left casing half 46. The detecting lever 71 is brought in elastic-contact with the slider outer 68 by a biasing force of the spring 72, so that the slider outer 68 and the slider inner 66 are biased to the clutch inner ring 61 side.

When the torsion bar 58 is torsionally deformed depending on a torque supplied from the crank pedals 32, 32 to the crank shaft 33, the slider inner 66 is rotated relatively to the clutch inner ring 61 in the direction shown by an arrow "c" as shown in Fig. 7 and thereby the cam face 66a of the slider inner 66 is pushed against the cam face 61b of the clutch inner ring 61. As a result, the slider inner 66 is slid against the biasing force of the spring 72 in the axial line of the crank shaft 33, that is, in the direction shown by an arrow "d", so that the detecting lever 70 pushed by the slider outer 68 moved together with the slider inner 66 is rocked around the fulcrum pin 69, and the probe 71a of the stroke sensor 71 is pressed by the detecting lever 70. The stroke of the probe 71a is proportion to the torsional amount of the torsion bar 58, that is, the torque inputted from the crank pedals 32, 32. The input torque is thus detected by the torque detecting means S_{T}.

Referring again to Figs. 2, 3, the second power transmission system 57 for transmitting a power of the motor 30 to the drive sprocket 34 includes a drive gear 74, a first intermediate gear 76, a second intermediate gear 77, a third intermediate gear 78, a second idle shaft 79, a second one-way clutch 80, a fourth intermediate gear 81, and a drive gear 82. The drive gear 74 is fixed to a rotating shaft 73 of the motor 30 in the second containing chamber 50. The first intermediate gear 76 is fixed on one end of a first idle shaft 75 in the second containing chamber 50 and it meshes the drive gear 74. The second intermediate gear 77 is integrally provided on the first idle shaft 75 in the first containing chamber 49. The third intermediate gear 78 meshes the second intermediate gear 77. The second idle shaft 79 is provided coaxially with the third intermediate gear 78. The second one-way clutch 80 is provided between the third intermediate gear 78 and the second idle shaft 79. The fourth intermediate gear 81 is integrally provided on the second idle shaft 79 in the first containing chamber 49. The driven gear 82 is integrally provided on the rotating cylinder 53 joined to the drive sprocket 34 and it meshes the fourth intermediate gear 81.

The first idle shaft 75 has an axial line parallel to the rotating shaft 73 of the motor 30. A ball bearing 83 is interposed between the right casing half 47 and the first idle shaft 75, and a ball bearing 84 is interposed 75. The second idle shaft 79 has an axial line parallel to the first idle shaft 75. A ball bearing 85 is interposed between the right casing half 47 and the second idle shaft 79, and a ball bearing 86 is interposed between the left casing half 46 and the second idle shaft 79.

The second power transmission system 57 reduces a torque obtained by operation of the motor 30 and transmits the reduced torque to the drive sprocket 34. When the operation of the motor 30 is stopped, the second one-way clutch 80 acts to allow idling of the second idle shaft 79, so that the rotation of the drive sprocket 34 due to a step-on force of the crank pedals 32, 32 is not affected by stoppage of the motor 30.

Referring to Fig. 8, a motor drive circuit 89 for driving the motor 30 is controlled by the controller 37. The controller 37 receives a detected value of a rotational speed detecting means S_{R} as well as a detected value of the torque detecting means S_{T}, and outputs a signal for controlling operation of the motor 30 on the basis of the detected values of both the detecting means S_{T}, S_{R}.

The rotational speed detecting means S_{R} detects a rotational speed which is representative of a bicycle speed in a state that the power of the bicycle is assisted by the motor 30. As shown in Figs. 2, 3, the rotational speed detecting means S_{R} is composed of a reluctor 87 as a detected portion, and a sensor 88 of an electromagnetic pick-up coil type. The reluctor 87, which has a projecting portion 87a positioned on an outer periphery thereof, is fixed on the rotating shaft 73 of the motor 30. In addition, the rotating shaft 73 of the motor 30 serves as a rotating member constituting part of the second power transmission system 57 between the motor 30 and the second one-way clutch 80. The sensor 88, which has a detecting portion 88a capable of being opposed to and moved closer to the projecting portion 87a, is fixed on the left casing half 46 of the casing 45.

Each time the projecting portion 87a is detected by the detecting portion 88a, the rotational detecting means S_{R} outputs a signal. In other words, it outputs a pulsed signal with time gaps corresponding to the rotational speed of the rotating shaft 73.

Incidentally, the controller 37 carries out a duty control of the motor 30 in accordance with a main routine shown in Fig. 9. First, at step 51 in Fig. 9, a rotational speed NCRM is set at [0]. The process goes on to step S2 at which a detected value of the torque detecting means S_{T} is set at an input torque TQRM.

At the next step S3, a drive duty ratio D is set on the basis of a map determined depending on the rotational speed NCRM and input torque TQRM. In addition, the map is set such that the drive duty ratio D becomes larger with an increase in rotational speed NCRM and it also becomes larger with an increase in input torque TQRM.

As shown in Fig. 10, the rotational speed NCRM is calculated by interruption handling on the basis of pulse input from the rotational speed detecting means S_{R}. At step S11 of Fig. 10, a detected rotational speed NCRI of the rotational speed detecting means S_{R} is calculated as (1/pulse time). The process goes on to step S12 at which it is decided whether or not the detected rotational speed NCRI is smaller than a value (NCRM + NCRUP) obtained by addition of a setting value NCRUP to the previous rotational speed NCRM, and the smaller value is selected as the present rotational speed NCRM.

Specifically, when the detected rotational speed NCRI corresponding to pulse input from the rotational speed detecting means S_{R} is varied to exceed a value obtained by addition of the setting value NCRUP to the rotational speed at the time of'the previous pulse input as shown by a broken line of Fig. 11, the value obtained by addition of the setting value NCRUP to the previous rotational speed is used as the present rotational speed NCRM for controlling operation of the motor 30 as shown by a solid line In Fig. 11. As a result, in the case of controlling operation of the motor 30, a variation in rotational speed NCRM is restricted to be less than the setting value NCRUP.

Referring again to Fig. 9, at step S4 after setting the drive duty ratio at step S3, the control of operation of the motor 30 using the drive duty ratio D thus set at step S3 is carried out.

The process goes on from step S4 to step S5 at which decision of motor lock is carried out in accordance with a sub-routine shown in Fig. 12. At step S21 in Fig. 12, it is decided whether or not the motor is being rotated. If the motor is being rotated, a counter is reset, that is, a count value TASS is set at [0] at step 522. If the motor is not rotated, that is, any detected value is not obtained by the rotational speed detecting means S_{R}, it is decided whether or not the motor is being controlled at step S23. If the motor is not controlled, the process is'returned from step S23 to step S22 at which the counter is reset.

If it is decided at step S23 that the motor is being-controlled, that is, the motor 30 is in the stoppage state although it is being controlled, the process goes on to step S24 at which counting is carried out by the counter such that the count value TASS is set as a value obtained by addition of an additional value (D/D0) to the previous count value TASS. The additional value (D/D0) is obtained by dividing the present drive duty ratio D by a specific drive duty ratio D0, so that it becomes larger in proportion to the present drive duty ratio D. As a result, when the present drive duty ratio D is large, the counting is quickened, that is, the count value becomes larger.

The process goes on from step S24 to step S25 at which it is decided whether or not the count value TASS is a specific value TASS0 or more. If TASS≧TASS0, it is decided at step S26 that the motor 30 is in the lock state.

According to the above decision of motor lock, when the motor 30 is accidentally in the lock state, the lock state is decided more quickly for the motor 30 having a larger drive duty ratio D. More concretely, in the lock state of the motor 30, if the drive duty ratio D is large, a current applied to the motor 30 becomes large, so that the lock state of the motor 30 can be decided for a time corresponding to the applied current, with a result that burning or the like of electric circuits relating to the motor 30 can be effectively prevented.

The function of this embodiment will be described below. When the crank pedals 32, 32 are operated by a rider for running of the motor-assisted bicycle, a power of the crank shaft 33 is transmitted to the drive sprocket 34 through the first power transmission system 56, and further it is transmitted to the rear wheel W_{R} through the chain 36 and the driven sprocket 35.

An input torque generated by the crank pedals 32, 32 is detected by the torque detecting means S_{T}. Further, a rotational speed of the motor 30, which is representative of the bicycle speed, is detected by the rotational speed detecting means S_{R}. And, an assisting power is supplied from the motor 30 to the rear wheel on the basis of the detected values of both the detecting means S_{T}, S_{R} for reducing the load of the rider.

In such a motor-assisted bicycle, the rotational speed detecting means S_{R} is composed of the reluctor 87 fixed on the rotating shaft 73 of the motor 30 which constitutes part of the second power transmission system 57 between the motor 30 and the second one-way clutch 80, and the sensor 88 mounted on the casing 45. As compared with a related art means in which the rotational speed of the rotating cylinder 53 is detected, the rotational speed detecting means S_{R} is advantageous in that since the rotational speed of the rotating shaft 73 is larger than the rotational speed of the rotating cylinder 53, the sizes of the rotational speed detecting means S_{R} and the casing 45 can be reduced using the reluctor 87 having a relatively small size; and a relatively inexpensive electromagnetic pick-up type sensor 88 can be used without use of an expensive semiconductor device such as a Hall device, resulting in the reduced cost.

Incidentally, the rotational speed detecting means S_{R} is disposed on the second power transmission system 57 at a position offset to the motor 30 side from the second one-way clutch 80. Accordingly, if the motor 30 is controlled using a detected value obtained by the rotational speed detecting means S_{R} as it is, there arises an inconvenience that when an input torque is reduced in the state the power is assisted by the motor 30, there occurs hunting of the rotation of the motor 30, which gives a shock due to the loosened stepping-on of the crank pedals to the rider of the motor-assisted bicycle. Specifically, as shown in Fig. 13(a), when the stepping-on of the crank pedals 32, 32 is stopped once and then performed again, the rotational speed of the motor 30 is made small accompanied by the reduced stepping-on torque, and thereby the second one-way clutch 80 of the second power transmission system 57 is cut off. Thus, the rotational speed of the motor 30 is made smaller as shown by a dashed line of Fig. 13(b) and is increased with a time-lag from an increase in rotational speed of the drive sprocket 34. At this time, since the rotational speed of the motor 30 is transmitted to the drive sprocket 34 through the second one-way clutch 80, it may be larger than the rotational speed of the drive sprocket 34 for a certain period of time T. Accordingly, if the motor 30 is being controlled using a detected value obtained by the rotational speed detecting means S_{R} as it is, the drive duty ratio D is set to be larger than a value corresponding to the actual rotational speed of the drive sprocket 34. Consequently, after the second one-way clutch 80 is turned on, a shock due to the loosened stepping-on of the crank pedals is given to the rider of the motor-assisted bicycle as shown by the dashed line of Fig. 13(a), and the motor-assisted bicycle is temporarily accelerated by increasing the rotational speed of each rotating member continuous to the second one-way clutch 80. After that, the drive torque becomes stationary.

On the contrary, in this embodiment, since the controller 37 restricts a variation in the rotational speed NCRM used for controlling operation of the motor 30 to be the setting value NCRUP or less, the increasing rate of the rotational speed of the rotating shaft 73 which increases with a time-lag from an increase in the stepping-on torque is relatively low as shown by a broken line of Fig. 13(b) because the drive duty ratio D of the motor 30 is set at a relatively low value. Accordingly, when the second one-way clutch 80 is turned on, the rotational speed is smoothly shifted to a value corresponding to the stationary bicycle speed without giving a shock due to the loosened stepping-on of the crank pedals to the rider of the motor-assisted bicycle.

For example, the relative positional relationship between the reluctor 87 and the sensor 88 of the rotational detecting means S_{R} is not limited to that shown in Figs. 2, 3; and the reluctor 87 and the sensor 88 may be contained in the motor 30.

The invention provides a motor-assisted bicycle in which a first power transmission system having a first one-way clutch is provided between a crank shaft having crank pedals at both ends thereof and a power transmission member for transmitting a power to a rear wheel, and a second power transmission system having a second one-way clutch is provided between an electrically assisting motor and the power transmission member, wherein operation of the motor is controlled by a control unit on the basis of detected values obtained by a rotational speed detecting means and a torque detecting means, and a rotational speed representative of a bicycle speed in a state in which an assisting force is applied from the motor to the rear wheel can be detected using an inexpensive, small-sized detecting means, and wherein a rotational speed representative of a bicycle speed can be detected using an inexpensive, small-sized detecting means and the motor can be smoothly controlled.

Therefore, in the controller for controlling operation of an electrically assisting motor 30 on the basis of detected values of a rotational speed detecting means S_{R} for detecting a rotating speed of a rotating member 73 provided between the motor 30 and a second one-way clutch 80 and a torque detecting means S_{T}, when a rotational speed detected by the rotational detecting means S_{R} is varied to exceed a value obtained by addition of a setting value to the previous rotational speed, the value obtained by addition of the setting value to the previous rotational speed is used as the present rotational speed for controlling operation of the motor 30. The rotational speed detecting means S_{R} is composed of a portion 87 to be detected which is provided on a rotating member 73 constituting part of a second power transmission system 57 between an electrically assisting motor 30 and a second one-way clutch 80, and a sensor 88 for detecting a rotational speed of the portion 87 to be detected.

## Claims (Claims for the following Contracting State(s): DE, FR.)

1. A motor-assisted bicycle, in which a first power transmission system (56) having a first one-way clutch (59) is provided between a crank shaft (33) rotatably supported by a casing (45) supported on a body frame (21) and having crank pedals (32) at both ends thereof and a power transmission member (53) interlocked with a rear wheel (W_{R}) ; and a second power transmission system (57) having a second one-way clutch (80) is provided between an electrically assisting motor (30), fixedly mounted on said casing (45), and said power transmission member (53),
said second power transmission system (57) having at least one idle shaft (79) for transmitting the motor power to the power transmission member (53) and said second one-way clutch (80) being provided with said idle shaft (79)
wherein operation of said motor (30) is controlled by a controller (37) on the basis of a detected value obtained by a rotational speed detecting means (S_{R}) for detecting a rotational speed representative of a bicycle speed in a state that the power is assisted by said motor (30), and a detected value obtained by a torque detecting means (S_{T}) for detecting an input torque of said crank pedals (32),
**characterized in that**
said rotational speed detecting means (S_{R}) comprises a portion (87) to be detected which is provided on a rotating member (73) constituting part of said second power transmission system (57) between said motor (30) and said second one-way clutch (80); and a sensor (88) for detecting a rotational speed of said portion (87) to be detected.

2. A motor-assisted bicycle according to claim 1, wherein said rotating member (73) comprises a rotating shaft of said motor (30).

3. A motor-assisted bicycle, in which a first power transmission system (56) having a first one-way clutch (59) is provided between a crank shaft (33) rotatably supported by a casing (45) supported on a body frame (21) and having crank pedals (32) at both ends thereof and a power transmission member (53) interlocked with a rear wheel (W_{R}); and a second power transmission system (57) having a second one-way clutch (80) is provided between an electrically assisting motor (30) fixedly mounted on said casing (45) and said power transmission member (53), wherein said motor-assisted bicycle comprises:
a torque detecting means (S_{T}) for detecting an input torque of said crank pedals (32); and
a controller (37) for controlling operation of said motor (30) on the basis of detected values of said detecting means (S_{R}, S_{T}),
**characterized in that**
a rotational speed detecting means (S_{R}) for detecting a rotational speed of a rotating member (73) constitutes part of said second power transmission system (57) between said motor (30) and said second one-way clutch (80),
wherein when a rotational speed detected by said rotational speed detecting means (S_{R}) is varied to exceed a value obtained by addition of a setting value to the previous rotational speed, said controller (37) uses the value obtained by addition of said setting value to the previous rotational speed as the present rotational speed for controlling operation of said motor (30).

## Claims (Claims for the following Contracting State(s): ES, IT, NL.)

1. A motor-assisted bicycle, in which a first power transmission system (56) having a first one-way clutch (59) is provided between a crank shaft (33) rotatably supported by a casing (45) supported on a body frame (21) and having crank pedals (32) at both ends thereof and a power transmission member (53) interlocked with a rear wheel (W_{R}); and a second power transmission system (57) having a second one-way clutch (80) is provided between an electrically assisting motor (30) fixedly mounted on said casing (45) and said power transmission member (53),
wherein operation of said motor (30) is controlled by a controller (37) on the basis of a detected value obtained by a rotational speed detecting means (S_{R}) for detecting a rotational speed representative of a bicycle speed in a state that the power is assisted by said motor (30), and a detected value obtained by a torque detecting means (S_{T}) for detecting an input torque of said crank pedals (32),
**characterized in that**
said rotational speed detecting means (S_{R}) comprises a portion (87) to be detected which is provided on a rotating member (73) constituting part of said second power transmission system (57) between said motor (30) and said second one-way clutch (80); and a sensor (88) for detecting a rotational speed of said portion (87) to be detected.

2. A motor-assisted bicycle according to claim 1, wherein said rotating member (73) comprises a rotating shaft of said motor (30).

3. A motor-assisted bicycle, in which a first power transmission system (56) having a first one-way clutch (59) is provided between a crank shaft (33) rotatably supported by a casing (45) supported on a body frame (21) and having crank pedals (32) at both ends thereof and a power transmission member (53) interlocked with a rear wheel (W_{R}); and a second power transmission system (57) having a second one-way clutch (80) is provided between an electrically assisting motor (30) fixedly mounted on said casing (45) and said power transmission member (53), wherein said motor-assisted bicycle comprises:
a torque detecting means (S_{T}) for detecting an input torque of said crank pedals (32); and
a controller (37) for controlling operation of said motor (30) on the basis of detected values of said detecting means (S_{R}, S_{T}),
**characterized in that**
a rotational speed detecting means (S_{R}) for detecting a rotational speed of a rotating member (73) constitutes part of said second power transmission system (57) between said motor (30) and said second one-way clutch (80),
wherein when a rotational speed detected by said rotational speed detecting means (S_{R}) is varied to exceed a value obtained by addition of a setting value to the previous rotational speed, said controller (37) uses the value obtained by addition of said setting value to the previous rotational speed as the present rotational speed for controlling operation of said motor (30).

## Patentansprüche (Patentansprüche für folgende(n) Vertragsstaat(en): DE, FR.)

1. Fahrrad mit Hilfsmotor, in dem ein erstes Kraftübertragungssystem (56), das eine erste Einwegkupplung (59) aufweist, zwischen einer Kurbelwelle (33), die an einem an einem Hauptrahmen (21) gelagerten Gehäuse (45) drehbar gelagert ist und die an ihren beiden Enden Kurbelpedale (32) aufweist, und einem Kraftübertragungselement (53), das mit einem Hinterrad (W_{R}) gekoppelt ist, vorgesehen ist; und ein zweites Kraftübertragungssystem (57), das eine zweite Einwegkupplung (80) aufweist, zwischen einem an dem Gehäuse (45) fest angebrachten elektrischen Hilfsmotor (30) und dem Kraftübertragungselement (53) vorgesehen ist, wobei das zweite Kraftübertragungssystem (57) zumindest eine Vorgelegewelle (79) zur Übertragung der Motorkraft auf das Kraftübertragungselement (53) aufweist und die zweite Einwegkupplung (80) mit der Vorgelegewelle (79) vorgesehen ist,
worin der Betrieb des Motors (30) durch ein Steuergerät (37) auf der Basis eines erfassten Werts, der durch ein Drehzahlerfassungsmittel (S_{R}) zum Erfassen einer eine Fahrradgeschwindigkeit repräsentierenden Drehzahl in einem Zustand, in dem die Kraft durch den Motor (30) unterstützt wird, erhalten ist, sowie eines erfassten Werts, der durch ein Drehmomenterfassungsmittel (S_{T}) zum Erfassen eines Eingangsdrehmoments der Kurbelpedale (32) erhalten ist, gesteuert/geregelt wird,
**dadurch gekennzeichnet, dass** das Drehzahlerfassungsmittel (S_{R}) einen zu erfassenden Abschnitt (87) aufweist, der an einem drehenden Element (73) vorgesehen ist, das Teil des zweiten Kraftübertragungssystems (57) zwischen dem Motor (30) und der zweiten Einwegkupplung (80) darstellt; sowie einen Sensor (88) zum Erfassen einer Drehzahl des zu erfassenden Abschnitts (87).

2. Fahrrad mit Hilfsmotor nach Anspruch 1, worin das drehende Element (73) eine Drehwelle des Motors (30) umfasst.

3. Fahrrad mit Hilfsmotor, in dem ein erstes Kraftübertragungssystem (56), das eine erste Einwegkupplung (59) aufweist, zwischen einer Kurbelwelle (33), die an einem an einem Hauptrahmen (21) gelagerten Gehäuse (45) drehbar gelagert ist und die an ihren beiden Enden Kurbelpedale (32) aufweist, und einem Kraftübertragungselement (53), das mit einem Hinterrad (W_{R}) gekoppelt ist, vorgesehen ist; und ein zweites Kraftübertragungssystem (57), das eine zweite Einwegkupplung (80) aufweist, zwischen einem an dem Gehäuse (45) fest angebrachten elektrischen Hilfsmotor (30) und dem Kraftübertragungselement (53) vorgesehen ist, worin das Fahrrad mit Hilfsmotor umfasst:
ein Drehmomenterfassungsmittel (S_{T}) zum Erfassen eines Eingangsdrehmoments der Kurbelpedale (32); und
ein Steuergerät (37) zum Steuern/Regeln des Betriebs des Motors (30) auf der Basis erfasster Werte des Erfassungsmittels (S_{R}, S_{T}),
**dadurch gekennzeichnet, dass** ein Drehzahlerfassungsmittel (S_{R}) zum Erfassen einer Drehzahl eines drehenden Elements (73) Teil des zweiten Kraftübertragungssystems (57) zwischen dem Motor (30) und der zweiten Einwegkupplung (80) darstellt,
worin dann, wenn eine von dem Drehzahlerfassungsmittel (S_{R}) erfasste Drehzahl so variiert, dass sie einen Wert überschreitet, der durch Addition eines Setzwerts zu der vorherigen Drehzahl erhalten ist, das Steuergerät (37) den Wert, der durch Addition des Setzwerts zu der vorherigen Drehzahl erhalten ist, als die gegenwärtige Drehzahl verwendet, um den Betrieb des Motors (30) zu steuern/zu regeln.

## Patentansprüche (Patentansprüche für folgende(n) Vertragsstaat(en): ES, IT, NL.)

1. Fahrrad mit Hilfsmotor, in dem ein erstes Kraftübertragungssystem (56), das eine erste Einwegkupplung (59) aufweist, zwischen einer Kurbelwelle (33), die an einem an einem Hauptrahmen (21) gelagerten Gehäuse (45) drehbar gelagert ist und die an ihren beiden Enden Kurbelpedale (32) aufweist, und einem Kraftübertragungselement (53), das mit einem Hinterrad (W_{R}) gekoppelt ist, vorgesehen ist; und ein zweites Kraftübertragungssystem (57), das eine zweite Einwegkupplung (80) aufweist, zwischen einem an dem Gehäuse (45) fest angebrachten elektrischen Hilfsmotor (30) und dem Kraftübertragungselement (53) vorgesehen ist,
worin der Betrieb des Motors (30) durch ein Steuergerät (37) auf der Basis eines erfassten Werts, der durch ein Drehzahlerfassungsmittel (S_{R}) zum Erfassen einer eine Fahrradgeschwindigkeit repräsentierenden Drehzahl in einem Zustand, in dem die Kraft durch den Motor (30) unterstützt wird, erhalten ist, sowie eines erfassten Werts, der durch ein Drehmomenterfassungsmittel (S_{T}) zum Erfassen eines Eingangsdrehmoments der Kurbelpedale (32) erhalten ist, gesteuert/geregelt wird,
**dadurch gekennzeichnet, dass** das Drehzahlerfassungsmittel (S_{R}) einen zu erfassenden Abschnitt (87) aufweist, der an einem drehenden Element (73) vorgesehen ist, das Teil des zweiten Kraftübertragungssystems (57) zwischen dem Motor (30) und der zweiten Einwegkupplung (80) darstellt; sowie einen Sensor (88) zum Erfassen einer Drehzahl des zu erfassenden Abschnitts (87).

2. Fahrrad mit Hilfsmotor nach Anspruch 1, worin das drehende Element (73) eine Drehwelle des Motors (30) umfasst.

3. Fahrrad mit Hilfsmotor, in dem ein erstes Kraftübertragungssystem (56), das eine erste Einwegkupplung (59) aufweist, zwischen einer Kurbelwelle (33), die an einem an einem Hauptrahmen (21) gelagerten Gehäuse (45) drehbar gelagert ist und die an ihren beiden Enden Kurbelpedale (32) aufweist, und einem Kraftübertragungselement (53), das mit einem Hinterrad (W_{R}) gekoppelt ist, vorgesehen ist; und ein zweites Kraftübertragungssystem (57), das eine zweite Einwegkupplung (80) aufweist, zwischen einem an dem Gehäuse (45) fest angebrachten elektrischen Hilfsmotor (30) und dem Kraftübertragungselement (53) vorgesehen ist, worin das Fahrrad mit Hilfsmotor umfasst:
ein Drehmomenterfassungsmittel (S_{T}) zum Erfassen eines Eingangsdrehmoments der Kurbelpedale (32); und
ein Steuergerät (37) zum Steuern/Regeln des Betriebs des Motors (30) auf der Basis erfasster Werte des Erfassungsmittels (S_{R}, S_{T}),
**dadurch gekennzeichnet, dass** ein Drehzahlerfassungsmittel (S_{R}) zum Erfassen einer Drehzahl eines drehenden Elements (73) Teil des zweiten Kraftübertragungssystems (57) zwischen dem Motor (30) und der zweiten Einwegkupplung (80) darstellt,
worin dann, wenn eine von dem Drehzahlerfassungsmittel (S_{R}) erfasste Drehzahl so variiert, dass sie einen Wert überschreitet, der durch Addition eines Setzwerts zu der vorherigen Drehzahl erhalten ist, das Steuergerät (37) den Wert, der durch Addition des Setzwerts zu der vorherigen Drehzahl erhalten ist, als die gegenwärtige Drehzahl verwendet, um den Betrieb des Motors (30) zu steuern/zu regeln.

## Revendications (Revendications pour l'(les) Etat(s) contractant(s) suivant(s): DE, FR.)

1. Bicyclette assistée par moteur, dans laquelle un premier système de transmission de puissance (56) ayant un premier embrayage unidirectionnel (59) est placé entre un arbre à vilebrequin (33), supporté d'une manière autorisant la rotation par un carter (45) supporté sur un cadre (21) et ayant des pédales à manivelle (32) aux deux extrémités de celui-ci, et un organe de transmission de puissance (53) interverrouillé avec une roue arrière (W_{R}) ; et un deuxième système de transmission de puissance (57) ayant un deuxième embrayage unidirectionnel (80) est placé entre un moteur électrique d'assistance (30) monté fixement sur ledit carter (45) et ledit organe de transmission de puissance (53), ledit deuxième système de transmission de puissance (57) ayant au moins un arbre de ralenti (79) destiné à transmettre la puissance du moteur à l'organe de transmission de puissance (53) et ledit deuxième embrayage unidirectionnel (80) étant muni dudit arbre de ralenti (79),
dans laquelle le fonctionnement dudit moteur (30) est commandé par un dispositif de commande (37) sur la base d'une valeur détectée obtenue par un moyen de détection (S_{R}) de vitesse de rotation destiné à détecter une vitesse de rotation représentative d'une vitesse de bicyclette dans un état où la puissance est assistée par ledit moteur (30), et d'une valeur détectée obtenue par un moyen de détection (S_{T}) de couple destiné à détecter un couple d'entrée desdites pédales à manivelle (32),
**caractérisée en ce que**
ledit moyen de détection (S_{R}) de vitesse de rotation comprend une partie (87) devant être soumise à détection qui est placée sur un organe rotatif (73) faisant partie dudit deuxième système de transmission de puissance (57) entre ledit moteur (30) et ledit deuxième embrayage unidirectionnel (80) ; et un capteur (88) destiné à détecter une vitesse de rotation de ladite partie (87) devant être soumise à détection.

2. Bicyclette assistée par moteur selon la revendication 1, dans laquelle ledit organe rotatif (73) comprend un arbre rotatif dudit moteur (30).

3. Bicyclette assistée par moteur, dans laquelle un premier système de transmission de puissance (56) ayant un premier embrayage unidirectionnel (59) est placé entre un arbre à vilebrequin (33), supporté d'une manière autorisant la rotation par un carter (45) supporté sur un cadre (21) et ayant des pédales à manivelle (32) aux deux extrémités de celui-ci, et un organe de transmission de puissance (53) interverrouillé avec une roue arrière (W_{R}) ; et un deuxième système de transmission de puissance (57) ayant un deuxième embrayage unidirectionnel (80) est placé entre un moteur électrique d'assistance (30) monté fixement sur ledit carter (45) et ledit organe de transmission de puissance (53), ladite bicyclette assistée par moteur comprenant :
un moyen de détection (S_{T}) de couple destiné à détecter un couple d'entrée desdites pédales à manivelle (32) ; et
un dispositif de commande (37) destiné à commander le fonctionnement dudit moteur (30) sur la base de valeurs détectées desdits moyens de détection (S_{R}, S_{T}),
**caractérisée en ce que**
un moyen de détection (S_{R}) de vitesse de rotation destiné à détecter une vitesse de rotation d'un organe rotatif (73) fait partie dudit deuxième système de transmission de puissance (57) entre ledit moteur (30) et ledit deuxième embrayage unidirectionnel (80),
dans laquelle, quand une vitesse de rotation détectée par ledit moyen de détection (S_{R}) de vitesse de rotation est modifiée jusqu'à dépasser une valeur obtenue par addition d'une valeur d'ajustement à la précédente vitesse de rotation, ledit dispositif de commande (37) utilise la valeur obtenue par addition de ladite valeur d'ajustement à la précédente vitesse de rotation comme nouvelle vitesse de rotation destinée à commander le fonctionnement dudit moteur (30).

## Revendications (Revendications pour l'(les) Etat(s) contractant(s) suivant(s): ES, IT, NL.)

1. Bicyclette assistée par moteur, dans laquelle un premier système de transmission de puissance (56) ayant un premier embrayage unidirectionnel (59) est placé entre un arbre à vilebrequin (33), supporté d'une manière autorisant la rotation par un carter (45) supporté sur un cadre (21) et ayant des pédales à manivelle (32) aux deux extrémités de celui-ci, et un organe de transmission de puissance (53) interverrouillé avec une roue arrière (W_{R}) ; et un deuxième système de transmission de puissance (57) ayant un deuxième embrayage unidirectionnel (80) est placé entre un moteur électrique d'assistance (30) monté fixement sur ledit carter (45) et ledit organe de transmission de puissance (53),
dans laquelle le fonctionnement dudit moteur (30) est commandé par un dispositif de commande (37) sur la base d'une valeur détectée obtenue par un moyen de détection (S_{R}) de vitesse de rotation destiné à détecter une vitesse de rotation représentative d'une vitesse de bicyclette dans un état où la puissance est assistée par ledit moteur (30), et d'une valeur détectée obtenue par un moyen de détection (S_{T}) de couple destiné à détecter un couple d'entrée desdites pédales à manivelle (32),
**caractérisée en ce que**
ledit moyen de détection (S_{R}) de vitesse de rotation comprend une partie (87) devant être soumise à détection qui est placée sur un organe rotatif (73) faisant partie dudit deuxième système de transmission de puissance (57) entre ledit moteur (30) et ledit deuxième embrayage unidirectionnel (80) ; et un capteur (88) destiné à détecter une vitesse de rotation de ladite partie (87) devant être soumise à détection.

2. Bicyclette assistée par moteur selon la revendication 1, dans laquelle ledit organe rotatif (73) comprend un arbre rotatif dudit moteur (30).

3. Bicyclette assistée par moteur, dans laquelle un premier système de transmission de puissance (56) ayant un premier embrayage unidirectionnel (59) est placé entre un arbre à vilebrequin (33), supporté d'une manière autorisant la rotation par un carter (45) supporté sur un cadre (21) et ayant des pédales à manivelle (32) aux deux extrémités de celui-ci, et un organe de transmission de puissance (53) interverrouillé avec une roue arrière (W_{R}) ; et un deuxième système de transmission de puissance (57) ayant un deuxième embrayage unidirectionnel (80) est placé entre un moteur électrique d'assistance (30) monté fixement sur ledit carter (45) et ledit organe de transmission de puissance (53), ladite bicyclette assistée par moteur comprenant :
un moyen de détection (S_{T}) de couple destiné à détecter un couple d'entrée desdites pédales à manivelle (32) ; et
un dispositif de commande (37) destiné à commander le fonctionnement dudit moteur (30) sur la base de valeurs détectées desdits moyens de détection (S_{R}, S_{T}),
**caractérisée en ce que**
un moyen de détection (S_{R}) de vitesse de rotation destiné à détecter une vitesse de rotation d'un organe rotatif (73) fait partie dudit deuxième système de transmission de puissance (57) entre ledit moteur (30) et ledit deuxième embrayage unidirectionnel (80),
dans laquelle, quand une vitesse de rotation détectée par ledit moyen de détection (S_{R}) de vitesse de rotation est modifiée jusqu'à dépasser une valeur obtenue par addition d'une valeur d'ajustement à la précédente vitesse de rotation, ledit dispositif de commande (37) utilise la valeur obtenue par addition de ladite valeur d'ajustement à la précédente vitesse de rotation comme nouvelle vitesse de rotation destinée à commander le fonctionnement dudit moteur (30).
